# EUROPEAN PATENT APPLICATION

(11) **EP 4 549 446 A1**
(43) Date of publication of application: **07.05.2025**
(21) Application number: 23383113.0
(22) Date of filing: 31.10.2023
(51) Int. Cl.: C07F 9/09, C07F 9/24, C07F 9/40

(54) **SULFORAPHANE ANALOGUES (SFNAS) AS WELL AS CD/SFNAS INCLUSION COMPLEXES AND USES THEREOF**

(71) Applicant: Universidad de Sevilla, 41013 Sevilla (ES); Consejo Superior De Investigaciones Científicas, 41013 Sevilla (ES); Servicio Andaluz de Salud, 41071 Sevilla (ES)
(72) Inventor: FERNÁNDEZ FERNÁNDEZ, Inmaculada, 41012 Sevilla (ES); KHIAR EL WAHABI, Noureddine, 41092 Sevilla (ES); PEREZ SIMON, José Antonio, 41071 Sevilla (ES); VALDIVIA GIMENEZ, Victoria Esther, 41012 Sevilla (ES); LERENA PÉREZ, Patricia, 41012 Sevilla (ES); RECIO JIMÉNEZ, Rocío, 41012 Sevilla (ES); KHIAR FERNÁNDEZ, Ismael, 41009 Sevilla (ES); PRIETO RAMÍREZ, Luis Alberto, 41012 Sevilla (ES); MORENO RODRÍGUEZ, Nazaret, 41012 Sevilla (ES); RODRIGUEZ GIL, Alfonso, 41009 Sevilla (ES); LEÓN MARTÍNEZ, Rafael, 28006 Madrid (ES); ROMERO MOLINA, Laura, 41092 Sevilla (ES); ROMERO BEN, Elena, 41092 Sevilla (ES); CASTILLEJOS ANGUIANO, María del Carmen, 41092 Sevilla (ES); CALDERÓN RUIZ, Rocío, 41071 Sevilla (ES); BEJARANO GARCÍA, José Antonio, 41071 Sevilla (ES)
(74) Representative: Hoffmann Eitle

(57) **Abstract**

The present disclosure relates to novel small molecules, particularly, sulforaphane analogues (SFNAs) as well as αCD/SFNAs inclusion complexes and their use as lead compounds for manufacturing a medicament or a pharmaceutical composition for therapy, in particular, for treating cancer.

## Description

### TECHNICAL FIELD OF THE INVENTION

The present disclosure relates to novel small molecules, particularly, sulforaphane analogues (SFNAs) as well as αCD/SFNAs inclusion complexes and their use as lead compounds for manufacturing a medicament or a pharmaceutical composition for therapy, in particular, for treating cancer.

### BACKGROUND ART

The naturally occurring isothiocyanate sulforaphane, found in Brassicaceae vegetables, is promising in cancer treatment, e.g., by the normalization of enhanced levels of NF-κB-signaling in tumour stem cells. Epidemiological studies indicate that higher consumption of Brassicaceae vegetables is correlated with a lower cancer risk. Pilot studies with sulforaphane-enriched broccoli sprout supplementation in patients with advanced pancreatic or prostate cancer have shown promising results. Brassicaceae are unique in their high content of glucosinolates. A focus has been placed on the glucosinolate glucoraphanin, which is found in high concentration in broccoli and its sprouts. Glucoraphanin is converted to its active form, the isothiocyanate sulforaphane [1-isothiocyanato-(4R)-(methylsulfinyl)butane], by myrosinase-mediated hydrolysis. Sulforaphane is one of the best studied bioactive anti-inflammatory agents and suggested to induce detoxifying enzymes, cell cycle arrest, apoptosis and epigenetic regulation. In pancreatic cancer, sulforaphane normalized increased NF-κB signaling in tumour stem cells by the induction of miRNA-365 expression, which inhibited the expression of the NF-κB subunit c-Rel by binding to its 3'-UTR.

Therefore, the development of highly active sulforaphane analogues suited for medication is urgently required. The present invention confronts this problem by providing a new series of sulforaphane analogues (SFNAs) as well as αCD/SFNAs inclusion complexes.

### BRIEF DESCRIPTION OF THE FIGURES

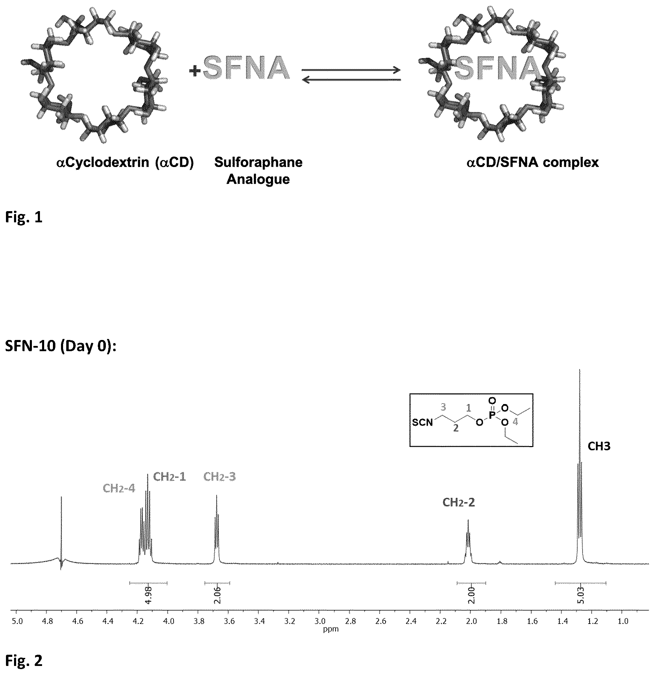

**Fig. 1****:** Schematic representation of αCD/SFNAs inclusion complex formation. (CD is cyclodextrin).

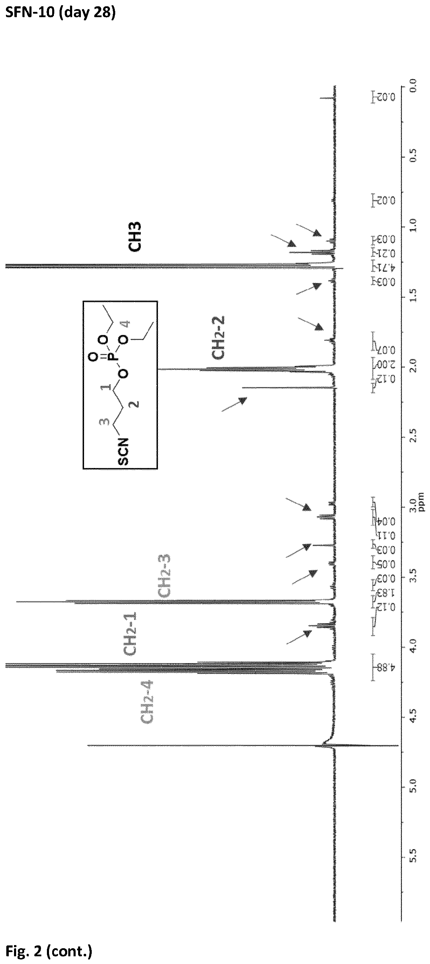

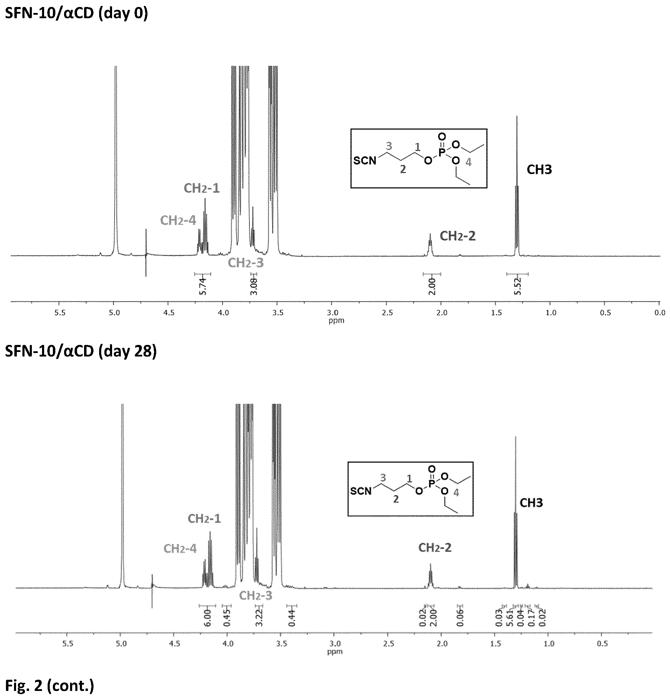

**Fig. 2****:** Stability study of **SFN-10** alone and in αCD.

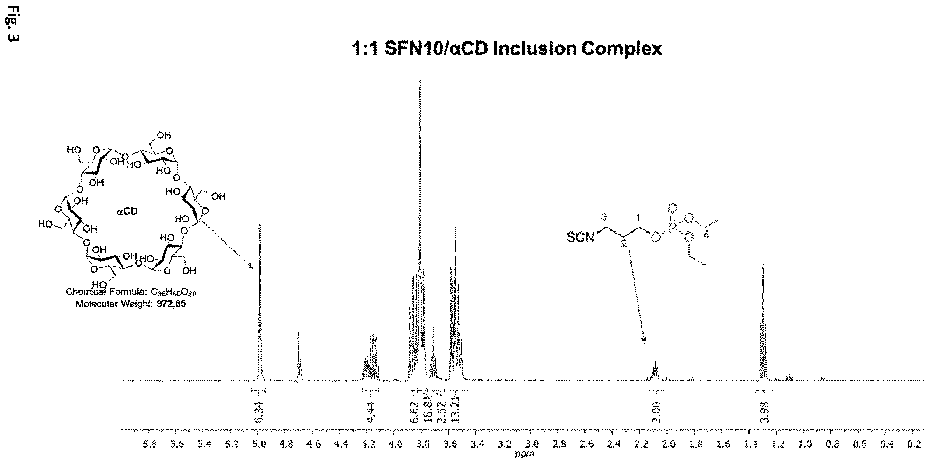

**Fig. 3****:** ¹H RMN of a 1:1 **SFN-10/**αCD complex.

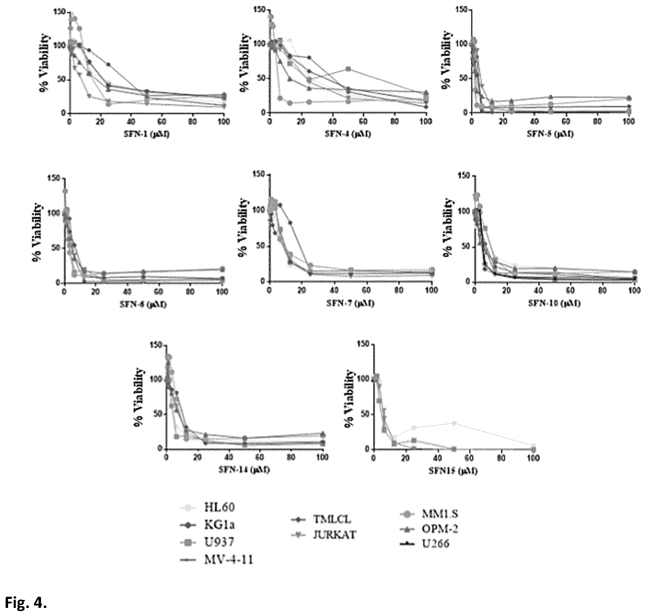

**Fig. 4****.** Treatment with natural sulforaphane **(SFN-1)** and sulforaphane analogues **(SFN-4, SFN-5, SFN-6, SFN-7, SFN-10, SFN-14, SFN-15)** reduces the viability of AML, ALL, and myeloma cell lines in a dose-dependent manner. Cell viability analysis by MTT assay in HL60, KG1a, U937, MV-4-11, TMLCL, Jurkat, MM1.S, OPM-2 and U266 after incubation with them (0-100 µM) for 18 h.

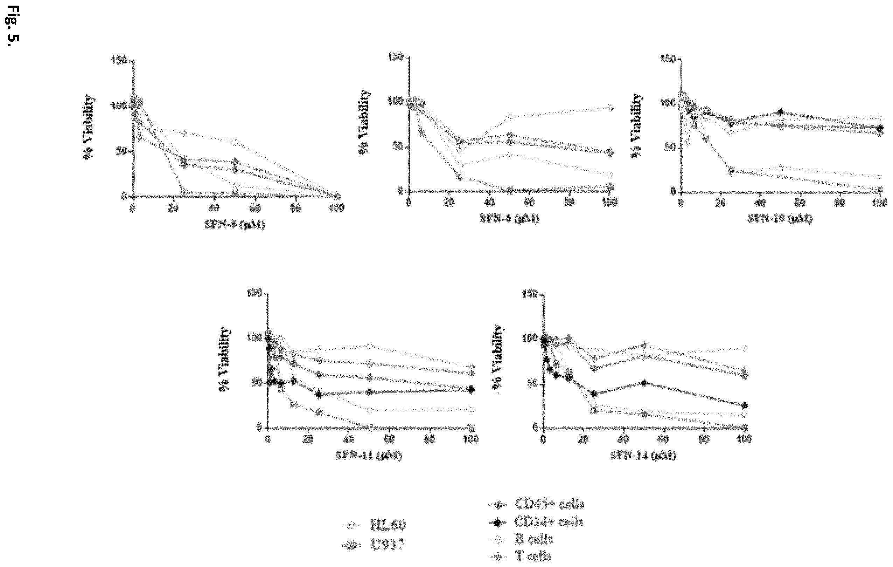

**Fig. 5****.** Treatment with different sulforaphane analogues **(SFN-5, SFN-6, SFN-10, SFN-11, SFN-14)** has a partially selective proapoptotic effect on AML cell lines in a dose-dependent manner. Analysis of cell viability by flow cytometry in HL60, U937, CD45+, CD34+, B lymphocytes and T lymphocytes after incubation with them (0-100 µM) for 18 h.

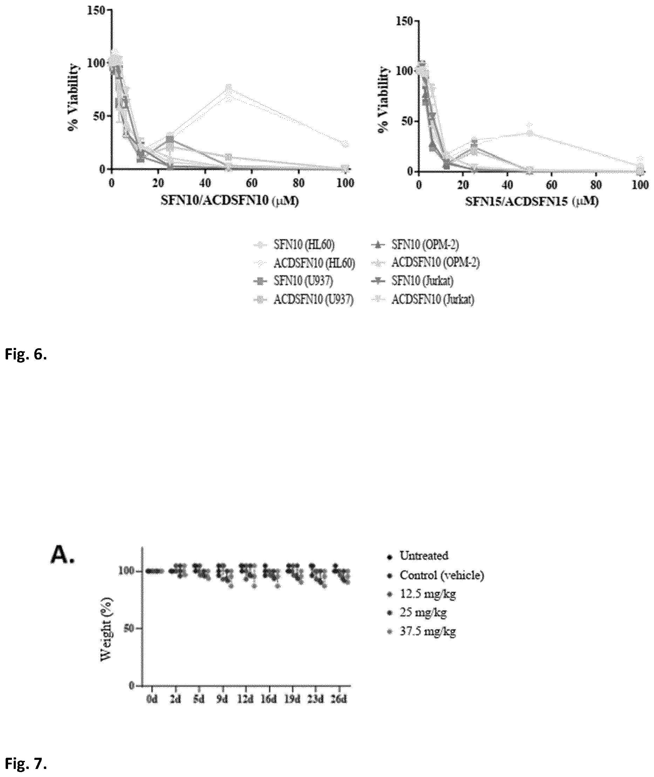

**Fig. 6****.** Cell viability assays of **SFN-10, SFN-15, SFN-10/**α-CD and **SFN-15/**α-CD**.** Analysis of cell viability by MTT assay in HL60, U937, OPM-2, and Jurkat after incubation with free or encapsulated sulforaphane analogues (0-100 µM) for 18 h.

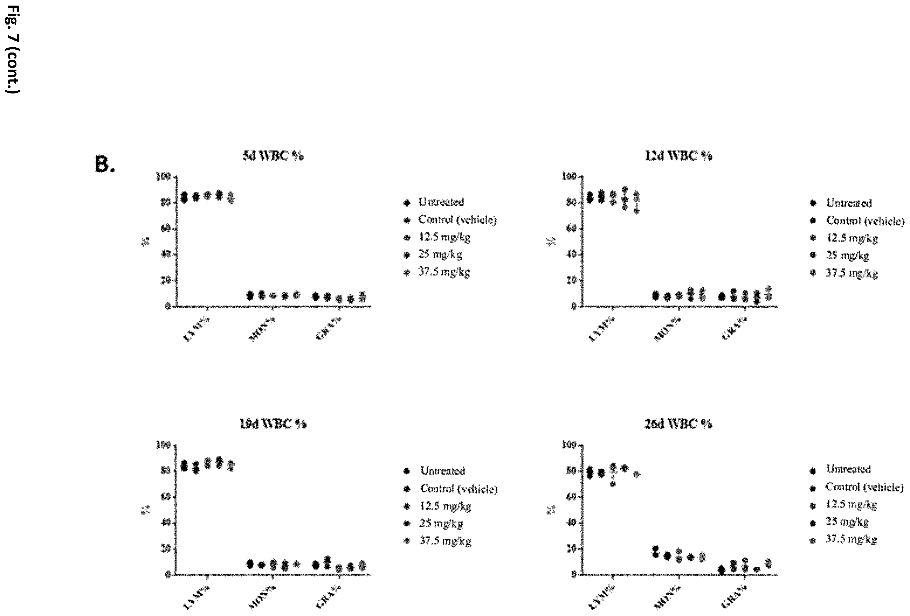

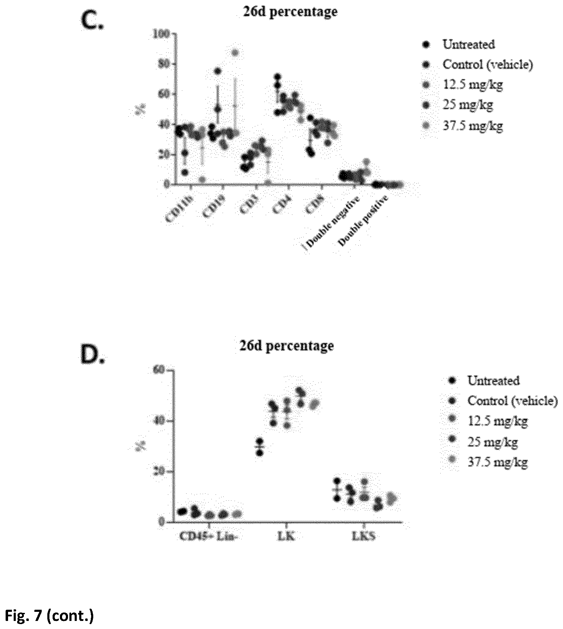

**Fig. 7****.** Comparison of mice untreated, treated with vehicle or treated with **SFN-10/**α-CD administered at the doses (12,5-37,5 mg/kg) for 26 days. A) Weight loss expressed as a percentage B) Analysis of the mononuclear part of the complete blood count. C) and D) Analysis of the hematopoietic subpopulations by flow cytometry in mice before and after treatment with vehicle or SFN-10/α-CD for 26 days.

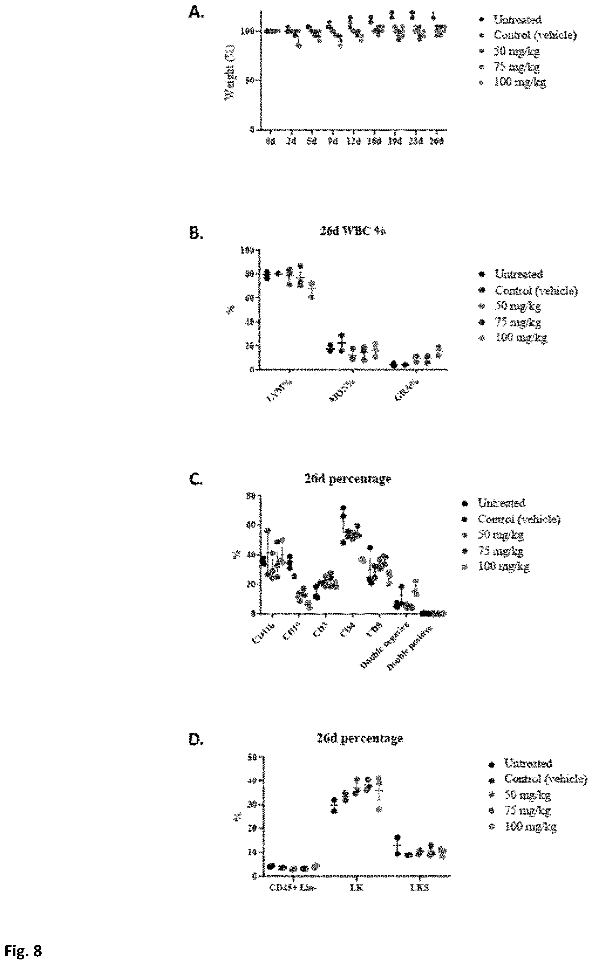

**Fig. 8****.** Comparison of mice untreated, treated with vehicle or treated with **SFN-10/**α-CD administered at doses (50-100 mg/kg) for 26 days. A) Weight loss expressed as a percentage B) Analysis of the mononuclear part of the complete blood count. C) and D) Analysis of the hematopoietic subpopulations by flow cytometry in mice before and after treatment with vehicle or **SFN-10/**α-CD for 26 days.

### DESCRIPTION OF PREFERRED EMBODIMENTS

The present invention may be understood more readily by reference to the following description of preferred embodiments of the invention and the examples included therein and to the figures and their previous and following description.

Before the present compounds, compositions, articles, devices, and/or methods are disclosed and described, it is to be understood that this invention is not limited to specific synthetic methods, as such may, of course, vary. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise.

In the present invention, we herein show the effect of natural sulforaphane **(SFN-1** (sulforaphane)) and several sulforaphane analogues **(SFN-4** (Diethyl (11-isothiocyanato-3,6,9-trioxaundecan-1-yl)phosphoramidate), **SFN-5** (Diethyl (8-isothiocyanatooctyl)phosphoramidate), **SFN-6** (Diethyl (6-isothiocyanatohexyl)phosphoramidate), **SFN-7** (Diethyl (4-isothiocyanatobutyl)phosphoramidate), **SFN-10** (Diethyl (3-isothiocyanatopropyl) phosphate), **SFN-14** (Diethyl (4-isothiocyanatobutyl)phosphonate), **SFN-15** (Diisopropyl (3-isothiocyanatopropyl) phosphate)) on the viability of various AML (Adult acute Myeloid Leukemia), ALL (Acute Lymphoblastic Leukaemia), and MM (Multiple Myeloma) cell lines by MTT assay and flow cytometry. We found that these compounds significantly reduced the viability of all AML, ALL, and MM cell lines compared to untreated control cells at 18 h (Figure 4).

The effect of sulforaphane analogues was further examined *ex vivo* by flow cytometry on normal cell subpopulations from healthy donors, which were partially affected by their incubation, except for **SFN-10** (Figure 5). These results indicate that **SFN-10** has a selective pro-apoptotic effect on tumour cells, while the viability of normal healthy cells, including hematopoietic precursor cells, is not affected.

After the viability study of the different sulforaphane analogues, the effect of the best analogues, specifically **SFN-10** and **SFN15** either free or encapsulated in α-cyclodextrin **(SFN-10**/α-CD, **SFN-15/**α-CD)**,** on the viability of two cell lines of AML (HL60 and U937), one of MM (OPM-2), one of ALL (Jurkat) was studied. We found that the free and the α-CD-encapsulated analogues, similarly, reduced the viability of all AML, ALL, and MM cell lines compared to untreated control cells at 18 h (Figure 6). This effect was also confirmed by flow cytometry for HL60, U937, OPM-2 and Jurkat at 18 h.

The effect of α-CD-encapsulated analogues was further studied *ex vivo* by flow cytometry in subpopulations of normal cells from healthy donors, finding no differences between the free and the α-CD-encapsulated analogues.

In addition, the effect of **SFN-10**/α-CD *in vivo* was examined. In the doses studied so far (12,5-100 mg/kg), we found no differences between mice treated with the α-CD-encapsulated analogue and those treated with the vehicle at 26 days (Figure 7 and 8).

Therefore, the present invention provides for the first time a novel series of sulforaphane analogues useful in therapy, in particular in cancer therapy.

Consequently, a first aspect of the invention refers to a compound of formula I:

(RO)₂-PO-X-(CH₂)ₙ(CH₂OCH₂)ₘCH₂NCS **Formula I**

wherein
- R is a hydrogen atom, a linear or branched substituted or unsubstituted C₁ to C₄ alkyl such as an ethyl or isopropyl group or a substituted or unsubstituted aromatic ring such as a phenyl group;
- X is a NR₁, O or S;
- R₁ is a hydrogen atom, a linear or branched substituted or unsubstituted C₁ to C₄ alkyl;
- n is any integer between 1 and 10; and
- m is any integer between 0 and 4;
or any pharmaceutical acceptable salt thereof.

In a preferred embodiment of the first aspect of the invention, the X is a NH or O and m is 0.

In another preferred embodiment of the first aspect of the invention, the X is O.

In another preferred embodiment of the first aspect of the invention, the X is NH.

In another preferred embodiment of the first aspect of the invention, the compound is of formula II 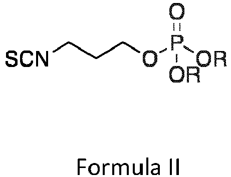 wherein R is selected from an ethyl, isopropyl or phenyl group, or any pharmaceutically acceptable salt thereof.

In another preferred embodiment of the first aspect of the invention, the compound is of formula III 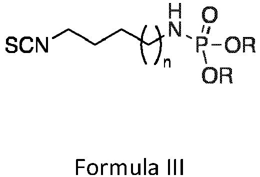 wherein R is an ethyl group and n is any integer selected from the list consisting of 1, 3 and 5, or any pharmaceutically acceptable salt thereof.

In another preferred embodiment of the first aspect of the invention, the compound is of formula II and R is an ethyl or isopropyl group.

In another preferred embodiment of the first aspect of the invention, the compound of formula I is selected from the group consisting of any of the following:
- **SFN-4** (Diethyl (11-isothiocyanato-3,6,9-trioxaundecan-1-yl)phosphoramidate),
- **SFN-5** (Diethyl (8-isothiocyanatooctyl)phosphoramidate),
- **SFN-6** (Diethyl (6-isothiocyanatohexyl)phosphoramidate),
- **SFN-7** (Diethyl (4-isothiocyanatobutyl)phosphoramidate),
- **SFN-10** (Diethyl (3-isothiocyanatopropyl) phosphate),
- **SFN-14** (Diethyl (4-isothiocyanatobutyl)phosphonate),
- **SFN-15** (Diisopropyl (3-isothiocyanatopropyl) phosphate);
or any pharmaceutically acceptable salt thereof.

The compounds of the invention as described in the first aspect of the invention may be readily synthesized using techniques generally known to those skilled in the art. Methods for making specific and preferred compounds of the present invention are described in detail in the examples below. Please refer to example 1 and to fifth aspect of the invention.

On the other hand, the present invention further relates to inclusion cyclodextrin (CD), preferably α-cyclodextrin complexes comprising an encapsulated sulpforaphane analogue as described above.

Hence, a second aspect of the invention refers to an inclusion cyclodextrin (CD), preferably α-cyclodextrin, complex comprising an encapsulated sulforaphane analogue as described in the first aspect of the invention. More particularly, the present invention refers to an inclusion complex of a sulforaphane analogue as described in the first aspect, or a pharmaceutically acceptable salt thereof, and a cyclodextrin characterized in that it has a molar ratio of the sulforaphane analogue, or a pharmaceutically acceptable salt thereof, to the cyclodextrin of preferably 1:1.

In the context of the present invention, the term "sulforaphane analogue" or "sulforaphane compound" shall be indistinctively understood to refer to any of the compounds defined in the first aspect of the invention.

By "inclusion complex" is meant a complex or an association between one or more cyclodextrin host molecules and one or more sulforaphane analogue molecules described herein. That is, the guest sulforaphane analogue molecules may form a complex with the cyclodextrin host molecule by fitting into the cavity of the host. The sulforaphane analogue molecules also form a complex with the cyclodextrin host molecule through association with the outer lip of the cavity or face of the cyclodextrin. Additionally, two or more cyclodextrins, depending upon the molar ratio of guest and host molecules, may form an assembled structure around the sulforaphane analogue molecules through association of the faces of the cyclodextrins with the sulforaphane analogue molecules.

In the practice of this invention, the useful CDs include those containing from 6-12 unsubstituted glucose monomers and those containing substituents which have a hydroxyl functionality. The preferred unsubstituted cyclodextrins include the α-, β-, and γ-CDs, most preferably α-CDs. The preferred derivatized CDs containing a hydroxyl functionality include hydroxypropyl CDs, hydroxyethyl CDs, hydroxybutenyl CDs, and sulfobutyl CDs.

In a preferred embodiment of the second aspect of the invention, the inclusion cyclodextrin complex is of formula IV:

(RO)₂-PO-X-(CH₂)ₙ(CH₂OCH₂)ₘCH₂NCS/CD **Formula IV**

wherein
- CD is cyclodextrin, preferably α-cyclodextrin;
- R is a hydrogen atom, a linear or branched substituted or unsubstituted C₁ to C₄ alkyl such as an ethyl or isopropyl group, or a substituted or unsubstituted aromatic ring such as a phenyl group;
- X is a CH₂, NR₁, OorS;
- R₁ is a hydrogen atom, a linear or branched substituted or unsubstituted C₁ to C₄ alkyl;
- n is any integer between 1 and 10; and
- m is any integer between 0 and 4;
or any pharmaceutical acceptable salt thereof.

It is noted that in this embodiment of the invention, formula IV has a molar ratio of the sulforaphane compound analogue to the cyclodextrin of preferably 1:1.

In another preferred embodiment of the second aspect of the invention, X in formula IV is a NH or O and m is 0.

In another preferred embodiment of the second aspect of the invention, X in formula IV is O, R is selected from an ethyl, isopropyl or phenyl group and m is 0.

In another preferred embodiment of the second aspect of the invention, the sulforaphane analogue of formula IV is a compound of formula II 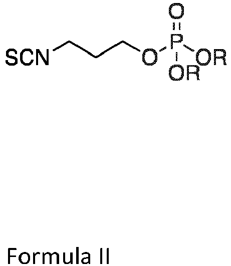 wherein R is selected from an ethyl, isopropyl or phenyl group, or any pharmaceutically acceptable salt thereof.

In another preferred embodiment of the second aspect of the invention, the sulforaphane analogue of formula IV is a compound of formula III 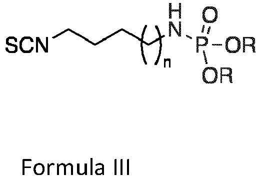 wherein R is an ethyl group and n is any integer selected from the list consisting of 1, 3 and 5; or any pharmaceutically acceptable salt thereof.

In yet another preferred embodiment of the second aspect of the invention refers to an inclusion complex of a sulforaphane analogue as defined in the first aspect, or a pharmaceutically acceptable salt thereof and a cyclodextrin characterized in that it has a molar ratio of the sulforaphane analogue, or a pharmaceutically acceptable salt thereof, to the cyclodextrin of preferably 1:1, wherein the sulforaphane analogue is selected from the list consisting of:
- **SFN-4** (Diethyl (11-isothiocyanato-3,6,9-trioxaundecan-1-yl)phosphoramidate),
- **SFN-5** (Diethyl (8-isothiocyanatooctyl)phosphoramidate),
- **SFN-6** (Diethyl (6-isothiocyanatohexyl)phosphoramidate),
- **SFN-7** (Diethyl (4-isothiocyanatobutyl)phosphoramidate),
- **SFN-10** (Diethyl (3-isothiocyanatopropyl) phosphate),
- **SFN-14** (Diethyl (4-isothiocyanatobutyl)phosphonate),
- **SFN-15** (Diisopropyl (3-isothiocyanatopropyl) phosphate);
or any pharmaceutically acceptable salt thereof.

On the other hand, to accomplish the goal of developing the inclusion complexes of the invention, please refer to example 2. Briefly, the process of obtaining the inclusion complexes was carried out by a physical mixture in water between α-cyclodextrin (host) and the sulforaphane analogue (guest; SFNA). Both the confirmation of complex formation, its stoichiometry, association constant (Kas), and degree of degradation were determined using ¹H NMR spectroscopy. Once the αCD/SFNA complex was formed, the 1:1 stoichiometry of the inclusion complex was confirmed using the continuous variation method (Job plot) (Job, P. Annali Di Chimica. 1928, 9, 113-203.) with ¹H NMR spectroscopy as the evaluation technique.

As used from herein onwards "compounds of the inventions" shall be understood as any of the compounds defined or referred to in the first or second aspects of the invention as well as in any of their preferred embodiments.

The compounds of the invention can be in a free form or in the form of a pharmaceutically acceptable salt. Examples of pharmaceutically acceptable salts include inorganic acid salts such as hydrochloride, sulfate, nitrate, phosphate or hydrobromide, etc., organic acid salt such as acetate, fumarate, oxalate, citrate, methanesulfonate, benzenesulfonate, p-toluenesulfonate or maleate, etc.

The compounds of the invention or their isomers, preferably enantiomers, or pharmaceutically acceptable salts can be in any of its intramolecular salt or adduct, or its solvates or hydrates.

A third aspect of the invention refers to a composition, preferably a pharmaceutical composition, comprising a compound of the invention as defined in the first or second aspect of the invention.

Though not wishing to be bound by any particular theory, it is believed that the compounds of the present invention, as shown in examples 3 and 4, provide protection against oxidative and inflammatory stress, such as disturbances of systems that protect cells against oxidative damage, heat shock, and disturbances caused by protein misfolding. These protective mechanisms are thought to be at least partly mediated by the transcription factor Nrf2 which controls expression of genes of the human genome via the Keapl/Nrf2/ARE regulatory system. This system may be upregulated in many tissues by the compounds of the present invention. These compounds also have inhibitory effects on the growth of various types of cancer cells and can induce apoptosis of cancer cells.

Therefore, in a fourth aspect of the present invention, this disclosure provides a method for treating an inflammatory disorder or a cancer in a subject, said method comprising administering to said subject an effective amount of a compound of the present invention. The method thus includes administering to the subject an effective amount of any of the compounds of the invention described above or a pharmaceutically acceptable salt thereof. The compounds of this disclosure are effective in treating cancer as shown in example 3. Cancer that may be treated by the compounds of this disclosure includes solid tumours such as, but not limited to, lung cancer, in particular lung adenocarcinoma, melanoma, or bladder cancer, and hematological cancers such as, but not limited to, leukaemia, as acute myeloid leukaemia, multiple myeloma, acute lymphoblastic leukaemia and lymphoma. Other cancers or tumours treatable by the compounds of the present invention can be selected from the group consisting of brain tumours, nasopharyngeal carcinoma, breast cancer, colon cancer, liver cancer, stomach cancer, esophageal cancer, and gastric cancer. The compounds of the present invention can also be used to treat autoimmune diseases as the activation of Nrf2 is known to be useful as a method to treat autoimmune diseases based on the well-established anti-inflammatory role of Nrf2.

In some embodiments, the effective amount of the compounds of this invention administered to the subject is from about 1 to 100 mg/Kg body weight of the subject by oral ingestion, intravenous or intramuscular injection. The amount is administered to the subject at about 10, 20, 30, 40, 50, 60, 70, 80, 90 or 100 mg/Kg body weight of the subject per day, preferably about 30 to 70 mg/Kg body weight of the subject, such as 30, 40, 50, 60 or 70 mg/Kg body weight of the subject per day. The dose can be administered in a single dosage, or alternatively in more than one dosage.

In some embodiments, the method further includes the step of subjecting the cancer to a radiation treatment after administering the compounds of the invention.

In some embodiments, the method further includes the step of administering another agent that is known to improve the treatment of cancer, before, together with and/or after administering the compound of this invention. Examples of such agent include, but are not limited to, anti-cancer drug, anti-angiogenesis agent, anti-virus agent, antibiotic, analgesic, anti-anemia drug, cytokine, granulocyte colony-stimulating factor (G-CSF), and anti-nausea drug and the like.

Examples of anti-cancer drug include, but are not limited to, paclitaxel, docetaxel, camptothecin (CPT), topotecan (TPT), irinotecan (CPT-11), doxorubicin, daunorubicin, epirubicin, fluorouracil, cis-platin, cyclophosphamide, vinblastine, vincristine, ifosfamide, melphalan, mitomycin, methotrexate, mitoxantrone, teniposide, etoposide, bleomycin, leucovorin, cytarabine, dactinomycin, streptozocin, combretastatin A4-phosphate, SU5416, and the like. Examples of anti-angiogenesis agent include, but are not limited to, DS 4152, TNP-470, SU6668, endostatin, 2-methoxyestradiol, angiostatin, thalidomide, tetrathiomolybdate, linomide, IL-12, and the like. Examples of anti-virus agent include, but are not limited to, amantadine, rimantadine, and the like. Examples of analgesic include, but are not limited to, paracetamol such as para-acetylaminophenol, non-steroidal anti-inflammatory drug (NSAID) such as salicylates, and opioid drugs such as morphine and opium. Example of anti-anemia drug includes, and is not limited to, erythropoietin.

As already indicated in the third aspect of the invention, this disclosure also provides a pharmaceutical composition, preferably for treating cancer; the composition comprises a therapeutically effective amount of a compound of this disclosure as shown above and optionally a pharmaceutically acceptable excipient.

Generally, the compound of this invention is present at a level of about 0.1% to 99% by weight, based on the total weight of the pharmaceutical composition. In some embodiments, the compound of this invention is present at a level of at least 1% by weight, based on the total weight of the pharmaceutical composition. In certain embodiments, the compound of this invention is present at a level of at least 5% by weight, based on the total weight of the pharmaceutical composition. In still other embodiments, the compound of this invention is present at a level of at least 10% by weight, based on the total weight of the pharmaceutical composition. In still yet other embodiments, the compound of this invention is present at a level of at least 25% by weight, based on the total weight of the pharmaceutical composition.

In some embodiments, the medicament of said pharmaceutical composition of this invention further includes an agent that is known to improve the treatment of cancer. Examples of such agent include, and are not limited to, anti-cancer drug, anti-angiogenesis agent, anti-virus agent, antibiotic, analgesic, anti-anemia drug, cytokine, granulocyte colony-stimulating factor, anti-nausea drug and the like.

The medicament or said pharmaceutical composition is prepared in accordance with acceptable pharmaceutical procedures, such as described in Remington's Pharmaceutical Sciences, 17th edition, ed. Alfonso R. Gennaro, Mack Publishing Company, Easton, Pa. (1985). Pharmaceutically acceptable excipients are those that are compatible with other ingredients in the formulation and biologically acceptable.

The compounds of this invention may be administered by any suitable route, for example, orally in capsules, suspensions or tablets or by parenterally administration. Parenterally administration can include, for example, systemic administration such as intramuscular, intravenous, subcutaneous, or intraperitoneal injection. The compound can also be administered transdermally either topically or by inhalation (e.g., intrabronchial, intranasal, oral inhalation or intranasal drops), or rectally, alone or in combination with conventional pharmaceutically acceptable excipients. In preferred embodiments, the compounds of this invention are administered orally (e.g., dietary) to the subject.

For oral administration, the compounds of the present invention may be formulated into tablets containing various excipients such as microcrystalline cellulose, sodium citrate, calcium carbonate, dicalcium phosphate, and glycine; along with various disintegrants such as starch, alginic acid and certain silicates; together with granulation binders like polyvinylpyrrolidone, sucrose, gelatin and acacia. Additionally, lubricating agents such as magnesium stearate, sodium lauryl sulfate and talc may be added. Solid composition may also be employed as fillers in gelatin capsules; preferred materials in this connection also include lactose or milk sugar as well as high molecular weight polyethylene glycols. When aqueous suspensions and/or elixirs are desired for oral administration, the active ingredient may be combined with various sweetening or flavoring agents, coloring matter or dyes, and if so desired, emulsifying and/or suspending agents as well, together with diluents such as water, ethanol, propylene glycol, glycerin and a combination thereof.

For parenteral administration, the compounds of the present invention may be formulated into liquid pharmaceutical compositions, which are sterile solutions, or suspensions that can be administered by, for example, intravenous, intramuscular, subcutaneous, or intraperitoneal injection. Suitable diluents or solvent for manufacturing sterile injectable solution or suspension include, but are not limited to, 1,3-butanediol, mannitol, water, Ringer's solution, and isotonic sodium chloride solution. Fatty acids, such as oleic acid and its glyceride derivatives are also useful for preparing injectables, as are natural pharmaceutically-acceptable oils, such as olive oil or castor oil. These oil solutions or suspensions may also contain alcohol diluent or carboxymethyl cellulose or similar dispersing agents. Other commonly used surfactants such as Tweens or Spans or other similar emulsifying agents or bioavailability enhancers that are commonly used in manufacturing pharmaceutically acceptable dosage forms can also be used for the purpose of formulation.

For topical administration, the medicament or said pharmaceutical compositions of this invention may be formulated into a variety of dosage forms for topical application. A wide variety of dermatologically acceptable inert excipients well known to the art may be employed. The topical compositions may include liquids, creams, lotions, ointments, gels, sprays, aerosols, skin patches, and the like. Typical inert excipients may be, for example, water, ethyl alcohol, polyvinyl pyrrolidone, propylene glycol, mineral oil, stearyl alcohol and gel-producing substances. All of the above dosages forms and excipients are well known to the pharmaceutical art. The choice of the dosage form is not critical to the efficacy of the composition described herein.

For transmucosal administration, the medicament or said pharmaceutical compositions of this invention may also be formulated in a variety of dosage forms for mucosal application, such as buccal and/or sublingual drug dosage units for drug delivery through oral mucosal membranes. A wide variety of biodegradable polymeric excipients may be used that are pharmaceutically acceptable, provide both a suitable degree of adhesion and the desired drug release profile, and are compatible with the active agents to be administered and any other components that may be present in the buccal and/or sublingual drug dosage units. Generally, the polymeric excipient comprises hydrophilic polymers that adhere to the wet surface of the oral mucosa. Examples of polymeric excipients include, but are not limited to, acrylic acid polymers and copolymers; hydrolyzed polyvinylalcohol; polyethylene oxides; polyacrylates; vinyl polymers and copolymers; polyvinylpyrrolidone; dextran; guar gum; pectins; starches; and cellulosic polymers.

Accordingly, this invention also provides methods of treating mammals, preferably humans, for cancer, which comprises the administration of the medicament or said pharmaceutical composition of this invention that contains a compound of this invention. Such medicament or composition is administered to a mammal, preferably human, by any route that may effectively transports the active ingredient(s) of the composition to the appropriate or desired site of action, such as oral, nasal, pulmonary, transdermal, such as passive or iontophoretic delivery, or parenteral, e.g., rectal, depot, subcutaneous, intravenous, intramuscular, intranasal, ophthalmic solution or an ointment. Further, the administration of the compound of this invention with other active ingredients may be concurrent or simultaneous.

It will be appreciated that the dosage of compounds of the present invention will vary from patient to patient not only for the particular compound or composition selected, the route of administration, and the ability of the compound (alone or in combination with one or more drugs) to elicit a desired response in the patient, but also factors such as disease state or severity of the condition to be alleviated, age, sex, weight of the patient, the state of being of the patient, and the severity of the pathological condition being treated, concurrent medication or special diets then being followed by the patient, and other factors which those skilled in the art will recognize, with the appropriate dosage ultimately being at the discretion of the attendant physician. Dosage regimens may be adjusted to provide the improved therapeutic response. A therapeutically effective amount is also one in which any toxic or detrimental effects of the compound or composition are outweighed by the therapeutically beneficial effects. Preferably, the compounds or compositions of the present invention are administered at a dosage and for a time such that the number and/or severity of the symptoms are decreased.

In the context of this disclosure, a number of terms shall be used.

The term "treating" or "treatment" as used herein refers to administering a compound of this invention to arrest the growth of at least 45%, 50%, 55%, 60% or 65% of the cancerous cells at G2/M cycle, preventing them from multiplying, and hence results in the reduction of the size of the cancer. Therefore, the term "treating" or "treatment" as used herein also refers to kill or induce apoptosis of the cancerous cells.

The term "an effective amount" as used herein refers to an amount effective, at dosages, and for periods of time necessary, to achieve the desired therapeutically desired result with respect to the treatment of cancer.

The terms "compounds", "compositions", "active compounds", "agent" or "medicament" are used interchangeably herein to refer to a compound or compounds or composition of which, when administered to a subject (human or animal) induces a desired pharmacological and/or physiological effect by local and/or systemic action.

The term "administered", "administering" or "administration" are used interchangeably herein to refer means either directly administering a compound or a composition of the present invention, or administering a prodrug, derivative or analog which will form an equivalent amount of the active compound within the body.

The term "subject" or "patient" refers to an animal including the human species that is treatable with the compositions and/or methods of the present invention. The term "subject" or "patient" intended to refer to both the male and female gender unless one gender is specifically indicated. Accordingly, the term "subject" or "patient" comprises any mammal, preferably a human, which may benefit from treatment by the compound of this disclosure.

The present invention will now be described more specifically with reference to the following embodiments, which are provided for the purpose of demonstration rather than limitation.

### Examples

### Example 1. Synthesis of SFN phosphorus analogues

### Structures

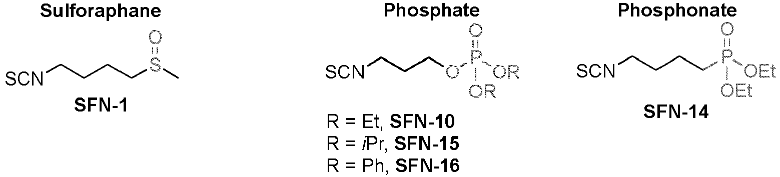

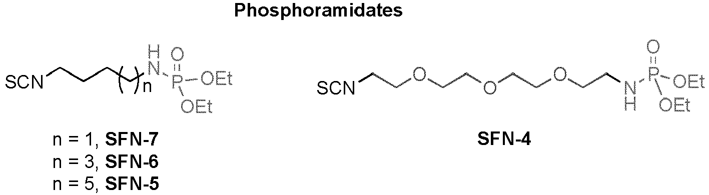

### Synthetic scheme

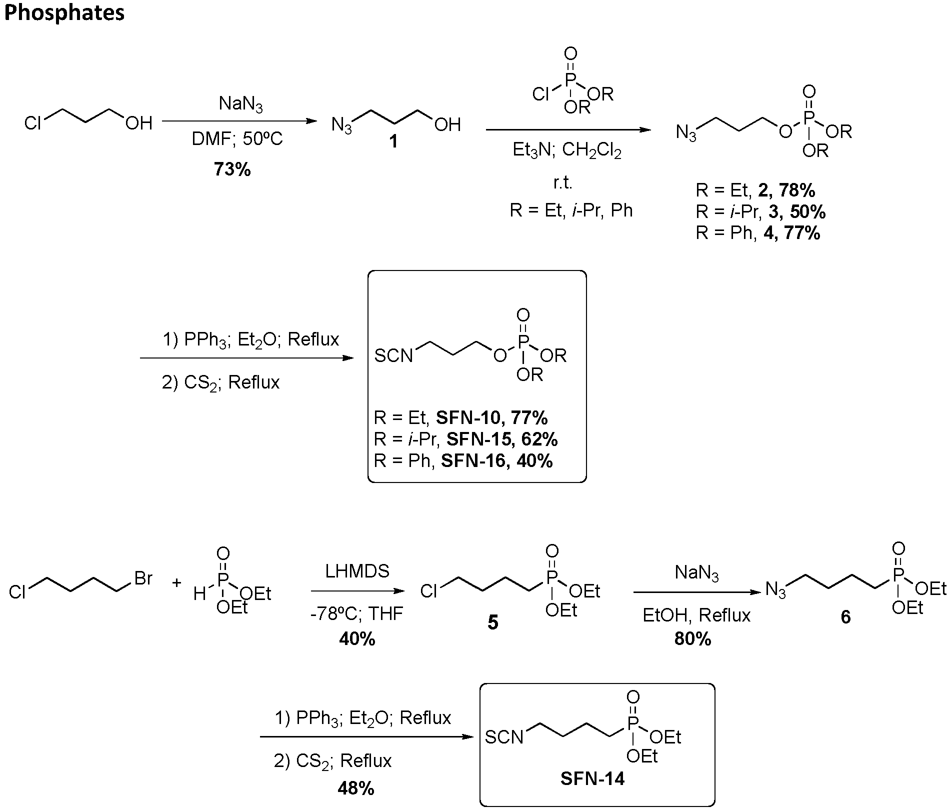

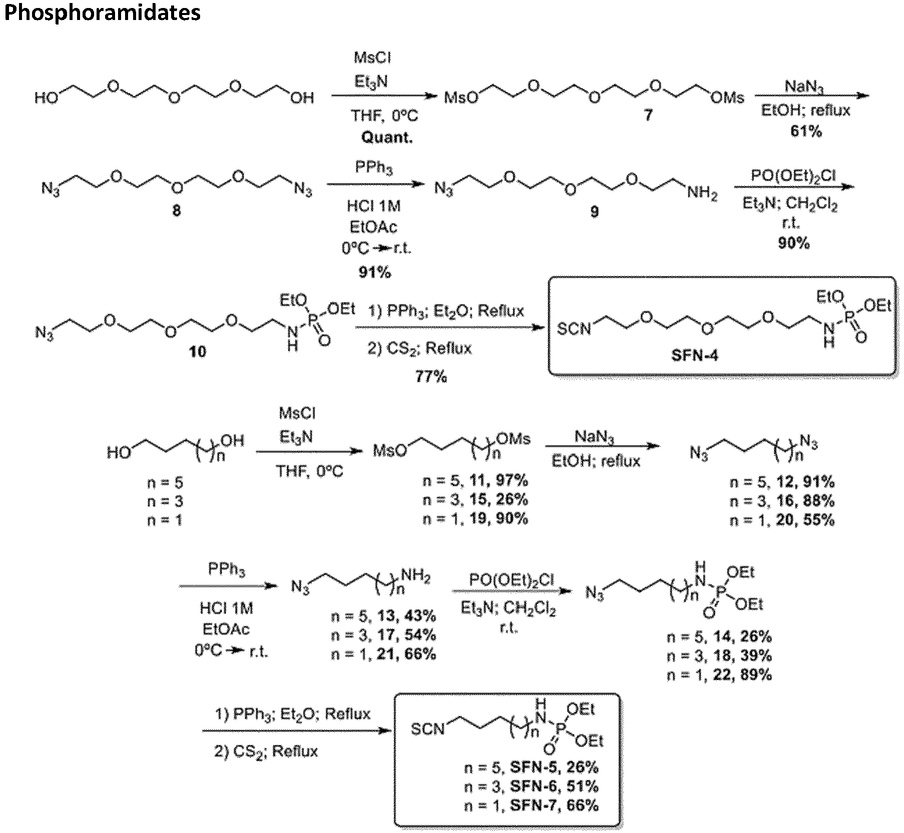

### Phosphate synthesis

### 3-Azidopropan-1-ol, 1

To a solution of 3-chloropropan-1-ol (100 mol%, 10 g, 105.8 mmol) in DMF (100 mL) was added sodium azide (200 mol%, 13.8 g, 211.6 mmol) at room temperature. The reaction mixture was heated to 50 °C for 48 hours, then cooled to room temperature and diluted with distilled H₂O. The aqueous layer was extracted with CH₂Cl₂ and the combined organic layers were dried over anhydrous Na₂SO₄ and concentrated under vacuum to give **1** (7.8 g, 77.2 mmol) as a yellow liquid. Yield: 73%
**¹H-NMR** (500 MHz, CDCl₃): δ 3.75 (t, J = 6.0 Hz, 2H), 3.44 (t, J = 6.6 Hz, 2H), 1.83 (quint, J = 6.3 Hz, 2H), 1.69 (s, 1H) ppm. **¹³C-NMR** (125 MHz, CDCl₃): δ 60.1, 48.6, 31.6 ppm. **HRMS:** calculated for C₃H₇ON₃Na [M+Na]⁺ : 124.0481; found 124.0478 (-2.3312 ppm).

### General procedure for the synthesis of azido phosphate derivatives.

To a solution of azido-alcohol 1 (100 mol%) and Et₃N (120 mol%) in CH₂Cl₂, under argon atmosphere and at 0 °C, the corresponding chlorophosphate (100 mol%) was slowly added and the temperature was allowed to rise up to room temperature. After the starting product was consumed, the reaction mixture was hydrolysed with saturated solution of NH₄Cl. The aqueous layer was extracted with CH₂Cl₂ and the combined organic layers were washed with saturated NaHCO₃ solution and brine, dried over anhydrous Na₂SO₄ and concentrated under vacuum.

### 3-Azidopropyl diethyl phosphate, 2

It was prepared following the general procedure from **1** (401.9 mg, 4.0 mmol), Et₃N (0.7 mL, 4.8 mmol) and diethyl chlorophosphate (0.6 mL, 4.0 mmol) in CH₂Cl₂ (5 mL). After 24 hours, the reaction crude was purified by flash chromatography (hexane:EtOAc, 2:1) to give **2** (731.0 mg, 3.1 mmol) as a yellow liquid. Yield: 78%
**¹H-NMR** (500 MHz, CDCl₃): δ 4.15-4.09 (m, 6H), 3.44 (t, J = 6.6 Hz, 2H), 1.93 (quint, J = 6.6 Hz, 2H), 1.34 (t, J = 7.1 Hz, 3H), 1.34 (t, J = 7.1 Hz, 3H) ppm. **¹³C-NMR** (125 MHz, CDCl₃): δ 64.4 (d, J = 6.0 Hz), 64.0 (d, J = 5.9 Hz), 47.8, 29.9 (d, J = 7.0 Hz), 16.3 (d, J = 6.8 Hz) ppm. **³¹P -NMR** (202 MHz, CDCl₃): δ -0.9 ppm. **HRMS:** calculated for C₇H₁₇O₄N₃P [M+H]⁺ : 238.0951; found 238.0950 (-0.4282 ppm).

### 3-Azidopropyl diisopropyl phosphate, 3.

It was prepared following the general procedure from **1** (400.0 mg, 4.0 mmol), Et₃N (0.7 mL, 4.8 mmol) and diisopropyl chlorophosphate (0.7 mL, 4.0 mmol) in CH₂Cl₂ (5 mL). After 24 hours, the reaction crude was purified by flash chromatography (hexane:EtOAc, 2:1) to give **3** (503.9 mg, 1.9 mmol) as a yellow liquid. Yield: 50 %
**¹H-NMR** (500 MHz, CDCl₃): δ 4.68-4.58 (m, 2H), 4.08 (dt, J = 6.1 and 6.6 Hz, 2H) 3.44 (t, J = 6.6 Hz, 2H), 1.92 (quint, J = 6.1 Hz, 2H), 1.33 (d, J = 6.2 Hz, 12H) ppm. **¹³C-NMR** (125 MHz, CDCl₃): δ 72.7 (d, J = 5.7 Hz), 64.0 (d, J = 5.8 Hz), 47.8, 29.8 (d, J = 7.3 Hz), 23.8 (d, J = 4.5 Hz), 23.7 (d, J = 4.4 Hz) ppm. **³¹P -NMR** (202 MHz, CDCl₃): δ -2.7 ppm. **HRMS:** calculated for C₉H₂₀O₄N₃NaP [M+Na]⁺ : 288.1084; found 288.1088 (1.6398 ppm).

### 3-Azidopropyl diphenyl phosphate, 4

It was prepared following the general procedure from **1** (400.0 mg, 4.0 mmol), Et₃N (0.7 mL, 4.8 mmol) and diphenyl chlorophosphate (0.8 mL, 4.0 mmol) in CH₂Cl₂ (5 mL). It was obtained **4** (1.0 g, 3.1 mmol) as a yellow liquid. Yield: 77%
**¹H-NMR** (500 MHz, CDCl₃): δ 7.40-7.33 (m, 4H), 7.29-7.20 (m, 6H), 4.36 (dt, J = 6.0 and 7.4 Hz, 2H), 3.40 (t, J = 6.5 Hz, 2H), 1.96 (quint, J = 6.1 Hz, 2H) ppm. **¹³C-NMR** (125 MHz, CDCl₃): δ 150.6 (d, J = 7.3 Hz), 130.0, 125.6, 120.1 (d, J = 4.7 Hz), 66.0 (d, J = 6.3 Hz), 47.5, 29.7 (d, J = 6.8 Hz) ppm. **³¹P -NMR** (202 MHz, CDCl₃): δ -12.0 ppm. **HRMS:** calculated for C₁₅H₁₇O₄N₃P [M+H]⁺ : 334.0951; found 334.0953 (0.5126 ppm).

### General procedure for the synthesis of isothiocyanates derived from phosphates, SFN-10, SFN-15 and SFN-16.

To a solution of the corresponding azide (100 mol%) in EtzO, triphenylphosphine (200 mol%) was added at room temperature. After the starting product was consumed, the solvent was removed under vacuum. To this residue was added carbon disulfide, after this mixture was refluxed for 3 h, the solvent was removed under vacuum. The crude product was purified by silica gel chromatography.

### Diethyl (3-isothiocyanatopropyl) phosphate, SFN-10

It was prepared following the general procedure from azide **2** (605.0 mg, 2.6 mmol), EtzO (35 mL), Ph₃P (1.3 g, 5.1 mmol) and CS2 (21 mL). The reaction crude was purified by flash chromatography (CH₂Cl₂:Acetone, 70:1) to give **SFN-10** (500.1 mg, 2.0 mmol) as a yellow liquid. Yield: 77%
**¹H-NMR** (500 MHz, CDCl₃): δ 4.16-4.10 (m, 6H), 3.69 (t, J = 6.4 Hz, 2H), 2.04 (quint, J = 6.3 Hz, 2H), 1.35 (t, J = 7.1 Hz, 3H), 1.34 (t, J = 7.1 Hz, 3H) ppm. **¹³C-NMR** (125 MHz, CDCl₃): δ 131.5 (SCN), 64.1 (d, J = 6.0 Hz), 63.7 (d, J = 6.0 Hz), 41.6, 30.8 (d, J = 7.1 Hz), 16.3 (d, J = 6.5 Hz) ppm. **³¹P-NMR** (202 MHz, CDCl₃): δ -1.1 ppm. **HRMS:** calculated for C₈H₁₆O₄NNaPS [M+Na]⁺ :276.0430; found 276.0426 (-1.5317 ppm).

### Diisopropyl (3-isothiocyanatopropyl) phosphate, SFN-15

It was prepared following the general procedure from azide **3** (300.0 mg, 1.1 mmol), EtzO (15 mL), Ph₃P (593.3 g, 2.3 mmol) and CS2 (9 mL). The reaction crude was purified by flash chromatography (hexane:EtOAc, 4:1) to give **SFN-15** (159.2 mg, 0.6 mmol) as a yellow liquid. Yield: 62%
**¹H-NMR** (500 MHz, CDCl₃): δ 4.65-4.55 (m, 2H), 4.08 (dt, J = 5.9 and 6.7 Hz, 2H) 3.66 (t, J = 6.4 Hz, 2H), 2,00 (quint, J = 5.9 Hz, 2H), 1.30 (d, J = 6.2 Hz, 12H) ppm. **¹³C-NMR** (125 MHz, CDCl₃): δ 131.1 (SCN), 72.8 (d, J = 5.7 Hz), 63.3 (d, J = 5.7 Hz), 41.5, 30.7 (d, J = 7.2 Hz), 23.7 (d, J = 5.2 Hz), 23.7 (d, J = 4.9 Hz) ppm. **³¹P-NMR** (202 MHz, CDCl₃): δ -2.9 ppm. **HRMS:** calculated for C₁₀H₂₀O₄NNaPS [M+Na]⁺ : 304.0743; found 304.0743 (-0.0530 ppm).

### Diphenyl 3-isothiocyanatopropyl phosphate, SFN-16

It was prepared following the general procedure from azide **4** (250.0 mg, 0.8 mmol), EtzO (10 mL), Ph₃P (393.5 mg, 1.5 mmol) and CS2 (6 mL). The reaction crude was purified by flash chromatography (hexane:EtOAc, 7:3) to give **SFN-16** (104.7 mg, 0.3 mmol) as a yellow liquid. Yield: 40%
**¹H-NMR** (500 MHz, CDCl₃): δ 7.42-7.34 (m, 4H), 7.29-7.20 (m, 6H), 4.38 (dt, J = 5.8 and 7.5 Hz, 2H), 3.61 (t, J = 6.4 Hz, 2H), 2.05 (quint, J = 6.1 Hz, 2H) ppm. **¹³C-NMR** (125 MHz, CDCl₃): δ 150.5 (d, J = 7.1 Hz), 131.6 (SCN), 130.0, 125.6, 120.1 (d, J = 4.8 Hz), 65.3 (d, J = 6.0 Hz), 41.3, 30.6 (d, J = 6.8 Hz) ppm. **³¹P-NMR** (202 MHz, CDCl₃): δ -12.1 ppm. **HRMS:** calculated for C₁₆H₁₇O₄NPS [M+H]⁺ : 350.0610; found 350.0609 (-0.3674 ppm).

### Phosphonate synthesis

### Diethyl (4-chlorobutyl)phosphonate, 5

To a solution of diethyl phosphonate (100 mol%, 805.4 mg, 5.8 mmol) in THF (40 mL), under argon atmosphere and at -78 °C, LHMDS (130 mol%, 7.6 mL, 7.6 mmol) was slowly added. After stirring for 20 min, 1-bromo-4-chlorobutane (100 mol%, 1.0 g, 5.8 mmol) was added at - 78 °C and the temperature was allowed to rise up to room temperature. After the starting product was consumed (24 h), the reaction mixture was hydrolyzed with saturated solution of NH4CI. The aqueous layer was extracted with CH₂Cl₂ and the combined organic layers were washed with saturated solution of NaHCO₃ and brine, dried over anhydrous Na2SO4 and concentrated under vacuum. The crude product was purified by silica gel chromatography (hexanes: EtOAc 1:1) to obtain 5 (537.3 mg, 2.3 mmol) as a yellow liquid. Yield: 40%
**¹H-NMR** (500 MHz, CDCl₃): δ 4.15-4.03 (m, 4H), 3.54 (t, J = 6.4 Hz, 2H), 1.90-1.84 (m, 2H), 1.81-1.70 (m, 4H), 1.32 (t, J = 7.1 Hz, 6H) ppm. **¹³C-NMR** (125 MHz, CDCl₃): δ 61.7 (d, J = 6.5 Hz), 44.3, 33.2 (d, J = 15.7 Hz), 25.1 (d, J = 141.7 Hz), 20.1 (d, J = 4.7 Hz), 16.6 (d, J = 5.8 Hz) ppm. **³¹P-NMR** (202 MHz, CDCl₃): δ 31.4 ppm. **HRMS:** calculated for C₈H₁₈O₃ClNaP [M+Na]⁺ : 251.0574; found 251.0569 (-2.2871 ppm).

### Diethyl (4-azidobutyl)phosphonate, 6

To a solution of the chlorinated derivative **5** (100 mol%, 500.0 mg, 2.2 mmol) in EtOH (20 mL), sodium azide (800 mol%, 1.1 g, 17.5 mmol) was added at room temperature. The reaction mixture was heated to reflux for 8 days. After this time, the mixture was hydrolysed with distilled H₂O. The aqueous layer was extracted with CH₂Cl₂ and the combined organic layers were dried over Na₂SO₄ anhydrous. After concentration under vacuum, **6** (410.3 mg, 1.7 mmol) was obtained as an orange liquid. Yield: 80%
**¹H-NMR** (500 MHz, CDCl₃): δ 4.15-4.04 (m, 4H), 3.29 (t, J = 6.3 Hz, 2H), 1.74-1.66 (m, 6H), 1.32 (t, J = 7.1 Hz, 6H) ppm. **¹³C-NMR** (125 MHz, CDCl₃): δ 61.7 (d, J = 6.5 Hz), 51.1, 29.7 (d, J = 15.7 Hz), 25.4 (d, J = 141.9 Hz), 20.1 (d, J = 5.3 Hz), 16.6 (d, J = 6.0 Hz) ppm. **³¹P -NMR** (202 MHz, CDCl₃): δ 31.3 ppm. **HRMS:** calculated for C₈H₁₉O₃N₃P [M+H]⁺ : 236.1159; found 236.1154 (-2.0446 ppm).

### Diethyl (4-isothiocyanatobutyl)phosphonate, SFN-14

To a solution of the azide 6 (100 mol%, 156.0 mg, 0.7 mmol) in Et₂O (8 mL), triphenylphosphine (200 mol%, 349.2 mg, 1.3 mmol) was added at room temperature. After the starting product was consumed (5 h), the solvent was removed under vacuum. To this residue was added carbon disulfide (5 mL), after this mixture was refluxed for 3 h, the solvent was removed under vacuum. The crude product was purified by silica gel chromatography (hexanes: EtOAc 1:2), to obtain **SFN-14** (76.3 mg, 0.3 mmol) as a colorless liquid. Yield: 48%
**¹H-NMR** (500 MHz, CDCl₃): δ 4.16-4.03 (m, 4H), 3.54 (t, J = 6.3 Hz, 2H), 1.84-1.68 (m, 6H), 1.32 (t, J = 7.1 Hz, 6H) ppm. **¹³C-NMR** (125 MHz, CDCl₃): δ 130.8 (SCN), 61.8 (d, J = 6.6 Hz), 44.7, 30.6 (d, J = 15.2 Hz), 26.1 (d, J = 142.2 Hz), 20.1 (d, J = 5.3 Hz), 16.6 (d, J = 6.1 Hz) ppm. **³¹P-NMR** (202 MHz, CDCl₃): δ 30.9 ppm. **HRMS:** calculated for C₉H₁₉O₃NPS [M+H]⁺ : 252.0818; found 252.0813 (-1.8283 ppm).

### Phosphoramidates synthesis

### Dimesylation of diols: General procedure.

To a solution of the corresponding diol (100 mol%) and Et₃N (80 mol%) in THF under argon atmosphere and at 0°C, methanesulfonyl chloride (210 mol%) was added dropwise. After stirring 1 h at 0°C, the reaction mixture was treated with saturated solution of NH₄Cl and extracted with CH₂Cl₂. The combined organic layers were dried over anhydrous Na₂SO₄ and evaporated under vacuum. The crude product was purified by silica gel chromatography (CH₂Cl₂/MeOH 20:1).

### 3,6,9-Trioxaundecane-1,11-diyl dimethanesulfonate, 7

It was prepared following the general procedure from tetraethylene glycol (25.0 g, 128.7 mmol), Et₃N (36.7 mL, 264.0 mmol) and methanesulfonyl chloride (20.9 mL, 270.0 mmol) in THF (100 mL). It was obtained **7** (44.75 g, 127.7 mmol) as a yellow liquid. Yield: quant.
**¹H-NMR** (500 MHz, CDCl₃): δ 4.35-4.33 (m, 4H) 3.74-3.72 (m, 4H), 3.64-3.60 (m, 8H), 3.04 (s, 1H) ppm. **¹³C-NMR** (125 MHz, CDCl₃): δ 70.7, 70.6, 69.4, 69.1, 37.7 ppm. **HRMS:** calculated for C₁₀H₂₃O₉S₂: [M+H]⁺ 351.0705; found 351.0741 (0.7 ppm)

### Octane-1,8-diyl dimethanesulfonate

It was prepared following the general procedure from 1,8-octanediol (10.0 g, 68.4 mmol), Et₃N (23.8 mL, 171.0 mmol) and methanesulfonyl chloride (13.2 mL, 171.0 mmol) in THF (500 mL). It was obtained **11** (20.0 g, 66.0 mmol) as a white solid. Yield: 97 %
**¹H-NMR** (500 MHz, CDCl₃): δ 4.25 (t, J = 6.6 Hz, 4H), 3.03 (s, 6H), 1.81-1.75 (m, 4H), 1.46-1.43 (m, 4H), 1.39-1.36 (m, 4H) ppm. **¹³C-NMR** (125 MHz, CDCl₃): δ 70.0, 37.4, 29.1, 28.8, 25.3 ppm. **HRMS:** calculated for C₁₀H₂₂O₆S₂Na [M+Na]⁺ : 325.0750; found 325.0749 (-0.4167 ppm)

### Hexane-1,6-diyl dimethanesulfonate

It was prepared following the general procedure from 1,6-hexanediol (10.0 g, 84.6 mmol), Et₃N (29.4 mL, 211.6 mmol) and methanesulfonyl chloride (16.4 mL, 211.6 mmol) in THF (500 mL). It was obtained **15** (22.9 g, 83.6 mmol) as a white solid. Yield: quant.
**¹H-NMR** (500 MHz, CDCl₃): δ 4.23 (t, J = 6.4 Hz, 4H), 3.0 (s, 6H), 1.78-1.76 (m, 4H), 1.48-1.45 (m, 4H) ppm. **¹³C-NMR** (125 MHz, CDCl₃): δ 69.8, 37.5, 29.1, 25.0 ppm. **HRMS:** calculated for C₈H₁₈O₆NaS₂: [M+Na]⁺ : 297.0434; found 297.0437 (-0.9812 ppm)

### Butane-1,4-diyl dimethanesulfonate

It was prepared following the general procedure from 1,4-butanediol (10.0 g, 111.0 mmol), Et₃N (38.6 mL, 277.5 mmol) and methanesulfonyl chloride (21.5 mL, 277.4 mmol) in THF (550 mL). It was obtained **19** (24.6 g, 99.8 mmol) as a yellow solid. Yield: 90%
**¹H-NMR** (500 MHz, CDCl₃): δ 4.30-4.27 (m, 4H), 3.02 (s, 6H), 1.92-1.90 (m, 4H) ppm. **¹³C-NMR** (125 MHz, CDCl₃): δ 69.0, 37.6, 25.6 ppm. **HRMS:** calculated for C₆H₁₄O₆NaS₂: [M+Na]⁺ : 269.0125; found 269.0124 (0.1929 ppm)

### Diazides Synthesis: General Procedure

To a solution of the corresponding dimesylated diol (100 mol %) in EtOH (1.43 M) NaN₃ (210 mol%) was added. After stirring at reflux for 24 h under argon atmosphere, the reaction mixture was treated with brine and the solvent was evaporated under vacuum. The residue was extracted with CH₂Cl₂ and the organic layer was dried over anhydrous Na₂SO₄ and evaporated under vacuum. The crude was purified by silica gel chromatography (CH₂Cl₂/MeOH).

### 1,11-Diazido-3,6,9-trioxaundecane, 8

It was prepared following the general procedure from **7** (3.0 g, 8.6 mmol) and NaN₃ (1.2 g, 18.0 mmol) in EtOH (6 mL). The reaction crude was purified by flash chromatography (CH₂Cl₂) to give **8** (1.3 mg, 5.3 mmol) as a yellow liquid. Yield: 61%
**¹H-NMR** (500 MHz, CDCl₃): δ 3.69-3.65 (m, 12H), 3.39 (t, J = 5.0 Hz, 4H) ppm. **¹³C-NMR** (125 MHz, CDCl₃): δ 70.9, 70.2, 50.8 ppm. **HRMS:** calculated for C₈H₁₆N₆O₃Na [M+Na] ⁺: 267.1176; found 267.1179.

### 1,8-Diazidooctane, 12

It was prepared following the general procedure from **11** (8.7 g, 28.7 mmol) and NaN₃ (4.7 g, 71.8 mmol) in EtOH (100 mL). The reaction crude was purified by flash chromatography (hexane: CH₂Cl₂, 70:1) to give **12** (5.1 g, 26.1 mmol) as a yellow liquid. Yield: 91 %
**¹H-NMR** (500 MHz, CDCl₃): δ 3.19 (t, J = 6.8 Hz, 4H), 1.56-1.50 (m, 4H), 1.32-1.26 (m, 8H) ppm. **¹³C-NMR** (125 MHz, CDCl₃): δ 51.5, 29.0, 28.8, 26.6 ppm. **HRMS:** calculated for C₈H₁₆N₆Na [M+Na]⁺ : 219.1328, found 219.1329 (-0.1102 ppm)

### 1,6-Diazidohexane, 16

It was prepared following the general procedure from **15** (15.9 g, 54.3 mmol) and NaN₃ (8.8 g, 135.7 mmol) in EtOH (170 mL). The reaction crude was purified by flash chromatography (hexane: CH₂Cl₂, 30:1) to give **16** (8.0 g, 47.5 mmol) as a yellow liquid. Yield: 88 %
**¹H-NMR** (500 MHz, CDCl₃): δ 3.30 (t, J = 6.9 Hz, 4H), 1.66-1.62 (m, 4H), 1.45-1.42 (m, 4H) ppm. **¹³C-NMR** (125 MHz, CDCl₃): δ 51.3, 28.7, 26.3 ppm.

### 1,4-Diazidobutane, 20

It was prepared following the general procedure from **19** (20.0 g, 81.2 mmol) and NaN₃ (13.2 g, 203.0 mmol) in EtOH (240 mL). The reaction crude was purified by flash chromatography (hexane) to give **20** (6.3 g, 44.6 mmol) as a yellow liquid. Yield: 55 %
**¹H-NMR** (500 MHz, CDCl₃): δ 3.37-3.33 (m, 4H), 1.74-1.68 (m, 4H) ppm. **¹³C-NMR** (125 MHz, CDCl₃): δ 50.9, 26.2 ppm. **HRMS:** calculated for C₄H₉N₆ [M+H]⁺ : 141.0883; found 141.0883 (-0.0065 ppm).

### Amine-Azides Synthesis: General Procedure

To a solution of the corresponding diazide (100 mol%) in HCl 1M (0.3 M) and EtOAc (0.6 M) at 0 °C, a solution of Ph₃P (110 mol%) in EtOAc (0.4 M) was added dropwise. Afterwards, the mixture was allowed to rise up to room temperature and stirred over 7 hours. The mixture was separated in a separatory funnel, and in the aqueous phase NaOH was added until pH >14. Then, CH₂Cl₂ (30 mL) was added and the organic phase was dried over anhydrous Na₂SO₄. Finally, the solvent was removed under vacuum.

### 11-Azido-3,6,9-trioxaundecan-1-amine, 9

It was prepared following the general procedure from **8** (4.1 g, 16.8 mmol), HCl (50.3 mL), EtOAc (29.8 mL) and a solution of Ph₃P (4.8 g, 18.5 mmol) in EtOAc (44.7 mL). It was obtained **9** (3.3 g, 15.3 mmol) as yellow liquid. Yield: 91%
**¹H-NMR** (500 MHz, CDCl₃): δ 3.69-3.62 (m, 10H), 3.52 (t, J=5.0 Hz, 2H), 3.39 (t, J=5.0 Hz, 2H), 2.88-2.86 (m, 2H), 1.81 (s, 2H) ppm. **¹³C-NMR** (125 MHz, CDCl₃): δ 73.4, 70.9, 70.8, 70.7, 70.4, 70.1, 50.8, 41.9 ppm. **HRMS:** calculated for C₈H₁₉N₄O₃ [M+H]⁺ : 219.1452; found 219.1447

### 8-Azidooctan-1-amine, 13

It was prepared following the general procedure from **12** (5.8 g, 29.5 mmol), HCl (40 mL), EtOAc (20 mL) and a solution of Ph₃P (8.5 g, 32.4 mmol) in EtOAc (20 mL). It was obtained **13** (2.1 g, 12.6 mmol) as yellow liquid. Yield: 43 %
**¹H-NMR** (500 MHz, CDCl₃): δ 3.62 (t, J = 6.7 Hz, 2H), 3.26-3.21 (m, 6H), 2.67 (t, J = 6.8 Hz, 2H), 1.60-1.42 (m, 6H) ppm. **¹³C-NMR** (125 MHz, CDCl₃): δ 63.0, 51.6, 42.3, 39.8, 33.8, 32.9, 25.8, 23.5 ppm. **HRMS:** calculated for C₈H₁₉N₄ [M+H]⁺ : 171.1603; found 171.164 (-0.7691)

### 6-Azidohexan-1-amine, 17

It was prepared following the general procedure from **16** (9.3 g, 55.0 mmol), HCl (180 mL), Et₂O (90 mL) and a solution of Ph₃P (15.9 g, 60.5 mmol) in EtOAc (90 mL). It was obtained **17** (4.2 g, 29.5 mmol) as yellow liquid. Yield: 54 %
**¹H-NMR** (500 MHz, CDCl₃): δ 3.26 (t, J = 6.9 Hz, 2H), 2.69 (t, J = 6.8 Hz, 2H), 1.64-1.58 (m, 2H), 1.49-1.43 (m, 2H), 1.41-1.34 (m, 4H) ppm. **¹³C-NMR** (125 MHz, CDCl₃): δ 51.4, 42.0, 33.6, 28.8, 26.6, 26.4 ppm. **HRMS:** calculated for C₆H₁₅N₄ [M+H] ⁺ : 143.1291; found 143.1289 (-1.3236)

### 4-Azidobutan-1-amine, 21

It was prepared following the general procedure from **20** (6.0 g, 42.8 mmol), HCl (200 mL), Et₂O (80 mL) and a solution of Ph₃P (12.3 g, 47.1 mmol) in EtOAc (120 mL). It was obtained **21** (3.2 g, 28.0 mmol) as yellow liquid. Yield: 66 %
**¹H-NMR** (500 MHz, CDCl₃): δ 3.23 (t, J = 6.9 Hz, 2H), 2.66 (t, J = 7.0 Hz, 2H), 1.61-1.55 (m, 2H), 1.49-1.43 (m, 2H), 1.23 (bs, 2H) ppm. **¹³C-NMR** (125 MHz, CDCl₃): δ 51.29, 41.59, 30.76, 26.23 ppm. **HRMS:** calculated for C₄H₁₁N₄ [M+H] ⁺ : 115.0978; found 115.0978 (-0.2550 ppm).

### Diethyl phosphoramidates synthesis: General Procedure

To a solution of the corresponding azide-amine (100 mol%) and Et₃N (120 mol%) in CH₂Cl₂ (0.8 M), under argon atmosphere and at 0 °C, diethyl chlorophosphate (100 mol%) was slowly added and the temperature was allowed to rise up to room temperature. After the starting product was consumed, the reaction mixture was hydrolyzed with saturated solution of NH₄Cl. The aqueous phase was extracted with CH₂Cl₂ and the combined organic layers were washed with saturated solution of de NaHCO₃ and brine dried over anhydrous Na₂SO₄ and the solvent was evaporated under vacuum.

### Diethyl 11-Azido-3,6,9-trioxaundecan-1-ylphosphoramidate, 10

It was prepared following the general procedure from 9 (2.6 g, 11.8 mmol), Et₃N (2.0 mL, 14.2 mmol), CH₂Cl₂ (15 mL) and diethyl chlorophosphate (1.7 mL, 11.8 mmol). It was obtained **10** (3.8 g, 10.6 mmol) as yellow liquid. Yield: 90 %
**¹H-NMR** (500 MHz, CDCl₃): δ 4.02-3.95 (m, 4H), 3.63-3.55 (m, 10H), 3.47 (t, J = 5.1 Hz, 2H), 3.33 (t, J = 5.0 Hz, 2H), 3.04-3.0 (m, 2H), 1.25 (t, J = 7.1 Hz, 6H) ppm. **¹³C-NMR** (125 MHz, CDCl₃): δ 71.2 (d, J = 6.5 Hz), 70.7, 70.6 (2C), 70.3, 70.0, 62.2 (d, J = 5.3 Hz), 50.6, 41.0, 16.2 (d, J = 7.3 Hz) ppm. **³¹P -NMR** (202 MHz, CDCl₃): δ 9.17 ppm. **HRMS:** calculated for C₁₂H₂₇N₄O₆NaP [M+Na] ⁺ : 377.1558; found 377.1560 (-0.6996 ppm)

### Diethyl 8-Azidooct-1-ylphosphoramidate, 14

It was prepared following the general procedure from **13** (2.1 g, 12.6 mmol), Et₃N (2.1 mL, 15.1 mmol), CH₂Cl₂ (25 mL) and diethyl chlorophosphate (2.1 mL, 13.8 mmol). It was obtained **14** (1.7 g, 5.6 mmol) as yellow liquid. Yield: 44 %
**¹H-NMR** (500 MHz, CDCl₃): δ 4.14-4.02 (m, 4H), 3.28 (t, J = 6.6 Hz, 2H), 2.29-2.91 (m, 2H), 2.51 (bs, 1H), 1.64-1.59 (m, 2H), 1.53-1.48 (m, 2H), 1.40-1.33 (m, 14H) ppm. **¹³C-NMR** (125 MHz, CDCl₃): δ 132.1 (d, J = 9.9 Hz), 131.9, 128.5 (d, J = 12 Hz), 62.2 (d, J = 5.3 Hz), 51.4, 41.4, 31.7 (d, J = 5.9 Hz), 29.1 (d, J = 4.3 Hz), 28.8, 26.6, 26.5, 16.2 (d, J = 6.8 Hz) ppm. **³¹P-NMR** (202 MHz, CDCl₃): δ 9.2 ppm. **HRMS:** calculated for C₁₂H₂₇N₄O₃PNa [M+Na] ⁺ :329.1713; found 329.1711 (-0.4578 ppm)

### Diethyl 6-azidohexylphosphoramidate, 18

It was prepared following the general procedure from **17** (2.0 g, 14.1 mmol), Et₃N (2.4 mL, 16.9 mmol), CH₂Cl₂ (25 mL) and diethyl chlorophosphate (4.6 mL, 15.5 mmol). The reaction crude was purified by flash chromatography (CH₂Cl₂:EtOAc 2:1) to give **18** (1.5 g, 5.5 mmol) as a yellow liquid. Yield: 39 %
**¹H-NMR** (500 MHz, CDCl₃): δ 4.1-4.00 (m, 4H), 3.26 (t, J = 6.8 Hz, 2H), 2.93-2.87 (m, 2H), 2.66-2.63 (m, 1H), 1.63-1.57 (m, 2H), 1.54-1.48 (m, 2H), 1.42-1.35 (m, 4H), 1.32 (t, J = 6.9 Hz, 6H) ppm. **¹³C-NMR** (125 MHz, CDCl₃): δ 62.2 (d, J = 5.4 Hz), 51.3, 41.3, 31.6 (d, J = 6.2 Hz), 28.7, 26.4, 26.1, 16.2 (d, J = 6.9 Hz) ppm. **³¹P-NMR** (202 MHz, CDCl₃): δ 9.1 ppm. **HRMS:** calculated for C₁₀H₂₄N₄O₃P [M+H] ⁺ : 279.1581; found 279.1585 (1.6082 ppm).

### Diethyl 4-azidobut-1-ylphosphoramidate, 22

It was prepared following the general procedure from **11** (1.0 g, 8.8 mmol), Et₃N (1.5 mL, 10.5 mmol), CH₂Cl₂ (12 mL) and diethyl chlorophosphate (2.6 mL, 8.8 mmol). The reaction crude was purified by flash chromatography (CH₂Cl₂:EtOAc 5:1) to give **22** (1.9 g, 7.8 mmol) as a yellow liquid. Yield: 89 %
**¹H-NMR** (500 MHz, CDCl₃): δ 4.05-3.94 (m, 4H), 3.23 (t, J = 6.7 Hz, 2H), 2.90-2.85 (m, 2H), 2.62 (bs, 1H), 1.60-1.48 (m, 4H), 1.26 (t, J = 7.0 Hz, 6H) ppm. **¹³C-NMR** (125 MHz, CDCl₃): δ 62.3 (d, J = 5.4 Hz), 51.1, 40.9, 29.0 (d, J = 6.1Hz), 26.0, 16.2 (d, J = 6.9 Hz) ppm. **³¹P-NMR** (202 MHz, CDCl₃): δ 9.1 ppm. **HRMS:** calculated for C₈H₂₀N₄O₃P [M+H] ⁺ : 273.1087; found 273.1092 (1.7633 pm).

### Isothiocyanate-phosphoramidates SFN-4, SFN-5, SFN-6 and SFN-7 synthesis: General procedure.

To a solution of the corresponding azide (100 mol%) in Et₂O (0.07 M), triphenylphosphine (200 mol%) was added at room temperature. After the starting product was consumed, the solvent was removed under vacuum. To this residue was added carbon disulfide (0.12 M), after this mixture was refluxed for 3 h, the solvent was removed under vacuum. The crude product was purified by silica gel chromatography.

### Diethyl 11-isothiocyanato-3,6,9-trioxaundecan-1-ylphosphoramidate, SFN-4

It was prepared following the general procedure from **10** (2.0 g, 5.6 mmol), EtzO (120 mL), Ph₃P (7.4 g, 28.2 mmol) and CS₂ (60 mL). The reaction crude was purified by flash chromatography (CH₂Cl₂:EtOAc 10:1) to give **SFN-4** (1.6 g, 4.3 mmol) as a yellow liquid. Yield: 77%
**¹H-NMR** (500 MHz, CDCl₃): δ 4.05-3.94 (m, 4H), 3.65-3.56 (m, 12H), 3.48-3.47 (m, 2H), 3.04-3.01 (m, 2H), 1.71 (bs, 1H), 1.25 (t, J = 7.1 Hz, 6H) ppm. **¹³C-NMR** (125 MHz, CDCl₃): δ 132.5, 71.2 (d, J = 5.9 Hz), 70.8, 70.6 (d, J = 2.9 Hz), 70.3, 69.3, 62.2 (d, J = 5.2 Hz), 45.2, 41.1, 16.19 (d, J = 7.1 Hz) ppm. **³¹P-NMR** (202 MHz, CDCl₃): δ 9.2 ppm. **HRMS:** calculated for C₁₃H₂₇N₂O₆PSNa [M+Na] ⁺ : 393.1220; found 393.1214 (-1.4268 ppm)

### Diethyl (8-isothiocyanatooctyl)phosphoramidate, SFN-5

It was prepared following the general procedure from **14** (1.7 g, 5.5 mmol), Et₂O (100 mL), Ph₃P (16.0 g, 61.0 mmol) and CS₂ (50 mL). The reaction crude was purified by flash chromatography (CH₂Cl₂:EtOAc 10:1) to give **SFN-5** (0.5 g, 1.5 mmol) as a white liquid. Yield: 26%
**¹H-NMR** (500 MHz, CDCl₃): δ 4.03-3.95 (m, 4H), 3.44 (t, J = 6.9 Hz, 2H), 2.85-2.80 (m, 2H), 2.37 (bs, 1H), 1.65-1.60 (m, 2H), 1.43-1.41 (m, 2H, 1.37-1.32 (m, 2H), 1.27-1.25 (m, 12H) ppm. **¹³C-NMR** (125 MHz, CDCl₃): δ 129.7, 62.2 (d, J = 5.3 Hz), 45.0, 41.4, 31.7 (d, J = 6.1 Hz), 29.9, 29.0, 28.7, 26.5 (d, J = 2.6 Hz), 16.2 (d, J = 6.8 Hz) ppm. **³¹P-NMR** (202 MHz, CDCl₃): δ 9.2 ppm. **HRMS:** calculated for C₁₃H₂₇N₂O₃PS [M+Na] ⁺ : 345.1371; found 345.1367 (-1.3877 ppm)

### Diethyl (6-isothiocyanatohexyl)phosphoramidate, SFN-6

It was prepared following the general procedure from **18** (2.0 g, 7.2 mmol), Et₂O (70 mL), Ph₃P (7.5 g, 28.7 mmol) and CS₂ (50 mL). The reaction crude was purified by flash chromatography (hexane:TBME 1:2) to give **SFN-6** (1.1 g, 3.7 mmol) as a yellow liquid. Yield: 51 %
**¹H-NMR** (500 MHz, CDCl₃): δ 4.04-3.93 (m, 4H), 3.45 (t, J = 6.6 Hz, 2H), 2.86-2.81 (m, 2H), 1.67-1.61 (m, 2H), 1.48-1.42 (m, 2H), 1.40-1.34 (m, 2H), 1.33-1.28 (m, 2H), 1.26 (t, J = 6.8 Hz, 6H) ppm. **¹³C-NMR** (125 MHz, CDCl₃): δ 62.1 (d, J = 5.3 Hz), 45.0, 41.2, 31.5 (d, J = 5.9 Hz), 29.8, 26.2, 25.8, 16.2 (d, J = 6.9 Hz) ppm. **³¹P-NMR** (202 MHz, CDCl₃): δ 9.2 ppm. **HRMS:** calculated for C₁₁H₂₃N₂O₃PSNa [M+Na] ⁺ : 317.1059; found 317.1058 (-0.4881).

### Diethyl (4-isothiocyanatobutyl)phosphoramidate, SFN-7

It was prepared following the general procedure from **22** (1.9 g, 7.8 mmol), Et₂O (80 mL), Ph₃P (4.1 g, 15.6 mmol) and CS₂ (50 mL). The reaction crude was purified by flash chromatography (toluene: Et₂O 1:2) to give **SFN-7** (1.4 g, 5.1 mmol) as a yellow liquid. Yield: 66 %
**¹H-NMR** (500 MHz, CDCl₃): δ 4.05-3.95 (m, 4H), 3.49 (t, J = 6.6 Hz, 2H), 2.98-2.97 (m, 1H), 2.91-2.85 (m, 2H), 1.72-1.67 (m, 2H), 1.59-1.53 (m, 2H), 1.26 (t, J = 7.0 Hz) ppm. **¹³C-NMR** (125 MHz, CDCl₃): δ 130.4, 62.3, 44.7, 40.5, 28.7 (d, J = 4.9 Hz), 27.1, 16.2 (d, J = 6.9 Hz) ppm. **HRMS:** calculated for C₉H₁₉N₂O₃PSNa [M+Na] ⁺ :289.0746; found 289.0747 (0.4177 ppm)

### Example 2. Encapsulation of compounds with general formula (I) in α-cyclodextrin. Study of stability and water solubility.

The preparation of inclusion complexes was carried out by a physical mixture in water between α-cyclodextrin (host) and the sulforaphane analogue (guest; SFNA). The confirmation of complex formation, its stoichiometry, association constant (Kas), and degree of degradation were determined using ¹H NMR spectroscopy.

Once the αCD/SFNA complex was formed, the 1:1 stoichiometry of the inclusion complex was confirmed using the continuous variation method (Job plot) (Job, P. Annali Di Chimica. 1928, 9, 113-203.) with ¹H NMR spectroscopy as the evaluation technique.

***Determination of the SFNA*/*αCD association constant.*** The determination of association constants (Kₐₛ, M⁻¹) for the SFNA/αCD complex was performed through ¹H NMR titration experiments in D₂O. The association constants at 298 K were experimentally determined by measuring the changes in chemical shift (Δδ, ppm) of the ¹H NMR signals using fixed solutions of the analogues against increasing concentrations of α-cyclodextrin. In a typical titration experiment, a 2 mM solution of the SFN analogue in D₂O was prepared, and a 500 µL aliquot was transferred to the NMR tube, and the initial spectrum was recorded. Furthermore, a solution of a mixture (SFNA at 2 mM/ αCD at 16.11 mM) was prepared and added in 10 µL aliquots to the NMR tube, keeping the analogue concentration constant. The added amounts of α-cyclodextrin were increased until complete complexation of the analogue, and ¹H NMR spectra were recorded after each addition. The mathematical treatment of the curves of chemical shift variations of the analogue proton signals (Δδ) against increasing α-cyclodextrin concentrations using an iterative least-squares fitting procedure allowed for the determination of the Kₐₛ values for the analogues (Table 1).

**Stability study.** In order to carry out the stability study of the analogues complexed with αCD, proton nuclear magnetic resonance (¹H NMR) was also used to monitor the state of SFN analogues in aqueous solution over time at room temperature in the presence and absence of α-cyclodextrin.

In all cases, the signal of the protons of the methylene group attached to phosphorus atom was taken as a reference to observe the degradation process undergone by the product. Zero-time and four-week (28-day) controls were performed for all analogues (Figure 1).

### Preparation of (1:1) SFNA/αCD complexes for biological studies.

An equimolar amount of α-cyclodextrin (αCD) previously diluted in Milli-Q water at a concentration of 0.13 M was added to a flask containing the SFNA and stirred for 5 hours. After this time, the mixture was incubated at 4°C overnight. Subsequently, the dispersion was freeze-dried, and the formation of the 1:1 complex was confirmed by ¹H NMR on a 400 MHz instrument (Figure 2).

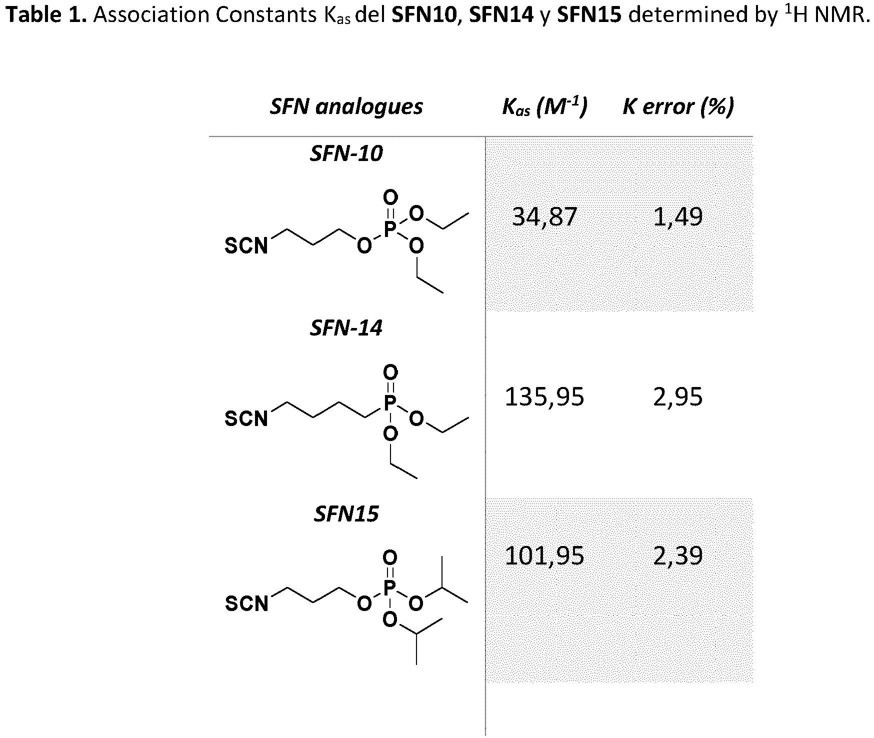

### Example 3. Anticancer Activity of New Sulforaphane Analogues

SFN analogues have been tested *in vitro* and *in vivo* to analyse their potential anticancer activities.

### Materials and Methods

### Drugs

SFN analogues were provided by IIQ-US research groups. Commercial drugs, cannabinoid WIN-55,212-2-mesylate and cannabinoid antagonist SR141716A, of Tocris Biosciences and Santa Cruz Biotechnology) have been used as a reference control.

### Cell cultures of acute myeloid leukaemia, acute lymphoblastic leukemia, multiple myeloma, and donor cells

*In vitro* studies were performed using human AML cell lines (HL60, KG1a, U937, and MV-4-11), human ALL cell lines (Jurkat and TMLCL), and human myeloma cell lines (MM1.S, OPM -2 and U266) different.

Primary human cells from healthy donors were used in *ex vivo* assays. The mononuclear fraction was extracted with Ficoll-Paque by density gradient centrifugation and subsequently differentiated from the other cell populations by flow cytometry using an appropriate combination of antibodies: anti-human CD45-Pacific Blue, CD34-FITC, CD19-APC-H7 (BD Biosciences, San Jose, CA) and CD3-FITC (Invitrogen).

All cell lines were grown in IMDM or RPMI-1640, respectively, supplemented with 10 or 15% foetal bovine serum (FBS) and 1% penicillin/streptomycin as recommended by the supplier.

### Cell viability analysis

Cell viability analysis was performed by MTT (3-(4,5-dimethylthiazol-2-yl)-2,5-diphenyltetrazolium bromide) assay and flow cytometry as described below. AML, ALL, and MM cell lines and primary cells were exposed to different doses of sulforaphane analogues and viability was assessed at 18 h. Cell viability was determined by MTT assays using the Cell Counting Kit-8 (Dojindo, Kumamoto, Japan) according to the manufacturer's instructions.

Cell viability and cell lysis were also assessed by annexin V/7-AAD using flow cytometry. Donor cells were analysed using 7-AAD a combination of monoclonal antibodies (anti-CD45-Pacific Blue, anti-CD34-FITC, anti-CD3-FITC, anti-CD19-APC-H7). The cells were acquired with the FACSCanto II flow cytometer (BD Biosciences) and analysed with the Infinicyt^{™} software (Cytognos, Spain).

### Murine model

Purchased C57BL/6 mice were randomized into the following groups (3 mice per group): (i) mice receiving ip 12.5 mg/kg **SFN-10/**α-CD**,** (ii) mice receiving ip 25 mg/kg **SFN-10/**α-CD**,** (iii) mice receiving ip 37.5 mg/kg **SFN-10/**α-CD**,** (iv) mice receiving ip 50 mg/kg **SFN-10/**α-CD**,** (v) mice receiving ip 75 mg/kg **SFN-10/**α-CD**,** (vi) mice receiving ip 100 mg/kg **SFN-10/**α-CD**,** and (vii) mice receiving ip 100 mg/kg of vehicle. As a negative control, we used an additional group of animals which were left untreated. They received the compound every 24 h in a "5 + 2" regimen. The animals were sacrificed after 26 days of treatment.

### Results

### Sulforaphane analogues selectively decrease the viability of AML, ALL and MM cell lines

First, we evaluated the effect of natural sulforaphane **(SFN-1)** and several sulforaphane analogues **(SFN-4, SFN-5, SFN-6, SFN-7, SFN-10, SFN-14, SFN-15)** on the viability of various AML, ALL, and MM cell lines by MTT assay and flow cytometry. We found that these compounds significantly reduced the viability of all AML, ALL, and MM cell lines compared to untreated control cells at 18 h (Figure 4).

The effect of sulforaphane analogues was further examined *ex vivo* by flow cytometry on normal cell subpopulations from healthy donors, which were partially affected by their incubation, except for **SFN-10** (Figure 5).

These results indicate that **SFN-10** has a selective pro-apoptotic effect on tumour cells, while the viability of normal healthy cells, including hematopoietic precursor cells, is not affected.

### Free and α-cyclodextrin-encapsulated sulforaphane analogues have the same effect

After the viability study of the different sulforaphane analogues, the effect of the best analogues, specifically **SFN-10** and **SFN-15** either free or encapsulated in α-cyclodextrin **(SFN-10**/α-CD, **SFN-15/**α-CD), on the viability of two cell lines of AML (HL60 and U937), one of MM (OPM-2), one of ALL (Jurkat) was studied. We found that the free and the α-CD-encapsulated analogues, similarly, reduced the viability of all AML, ALL, and MM cell lines compared to untreated control cells at 18 h (Figure 6). This effect was also confirmed by flow cytometry for HL60, U937, OPM-2 and Jurkat at 18 h.

The effect of α-CD-encapsulated analogues was further studied *ex vivo* by flow cytometry in subpopulations of normal cells from healthy donors, finding no differences between the free and the α-CD-encapsulated analogues.

In addition, the effect of **SFN-10**/α-CD *in vivo* was examined. In the doses studied so far (12,5-100 mg/kg), we found no differences between mice treated with the α-CD-encapsulated analogue and those treated with the vehicle at 26 days (Figure 7 and 8).

### Example 4. NrF2 activation

**Table 2: Luciferase tests results of selected SFN Analogues.**

| Structure | R | Compound | CD ± SEM (µM) |
|---|---|---|---|
| 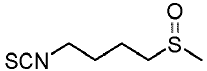 | - | **SFN-1** | 0.44 ± 0.28 |
| 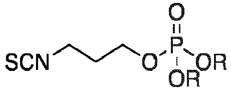 | Et | **SFN-10** | 0.56 ± 0.07 |
| | iPr | **SFN-15** | 0.52 ± 0.08 |
| | Ph | **SFN-16** | 1.55 ± 0.45 |

| | | | |
|---|---|---|---|
| CD: concentration required to double the specific activity of the luciferase gene. | | | |

### Nrf2-ARE induction

AREc32 cells (kindly shared by Prof. C.R. Wolf) were grown in Dulbecco's modified Eagle medium (DMEM) with glutamax, supplemented with 10% foetal bovine serum (FBS), 1% penicillin-streptomycin and geneticin (0.8 mg/mL, G418) (GIBCO, Madrid, Spain) at 37 °C in a 5% CO₂ atmosphere and subcultured in a new flask when confluence increased to 80%. Cells were seeded in 96-well white plates (20,000 cells/well) using 100 µL/well of culture media. After 24 h in culture, cells were treated with compounds at desired concentrations (1, 5, 10, 15 µM) for 24 h, including tert-butyl hydroquinone (TBHQ, 10 µM) as a positive control. Thereafter, luciferase activity was assessed by a bioluminescence assay using the "Luciferase assay system" (Promega E1500), following provider protocol, measuring luminescence in a ClarioStar multiwell plate reader (BMG Labtech, Germany). Treatments were performed in duplicate, and values were normalized to basal luminescence considered as 1. Nrf2 induction capacity was expressed as CD values, (concentrations required to double luciferase activity) obtained from dose-response curves generated by plotting folds induction at each concentration Vs. Log[compound] fitted by non-linear regression and data interpolated to value 2.

### Statistical Analysis

Data are represented as mean ± S.E.M. CD values were calculated by non-linear regression analysis of individual dose-response curves. Experimental and control groups were compared using the t-test and multiple groups were compared using a one-way analysis of variance test (one-way ANOVA) followed by a Newman-Keuls post hoc test. Statistical significance was set at * *p* < 0.033, ** *p* < 0.002, and *** *p <* 0.001. Data was analysed using GraphPad Prism 8.0 software.

## Claims

1. A compound of formula I:
(RO)₂-PO-X-(CH₂)ₙ(CH₂OCH₂)ₘCH₂NCS **Formula I**
wherein
- R is a hydrogen atom, a substituted or unsubstituted C₁ to C₄ alkyl, a substituted or unsubstituted phenyl;
- X is a NR₁, O or S;
- R₁ is a hydrogen atom, a substituted or unsubstituted C₁ to C₄ alkyl
- n is any integer between 1 and 10; and
- m is any integer between 0 and 4;
or any pharmaceutical acceptable salt thereof.

2. The compound according to claim 1, wherein X is a NH or O and m is 0.

3. The compound according to claim 2, wherein X is O.

4. The compound according to claim 2, wherein X is NH.

5. The compound according to claim 3, wherein the compound is of formula II 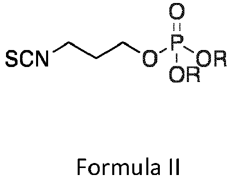 wherein R is selected from an ethyl, isopropyl or phenyl group;
or any pharmaceutically acceptable salt thereof.

6. The compound according to claim 4, wherein the compound is of formula III 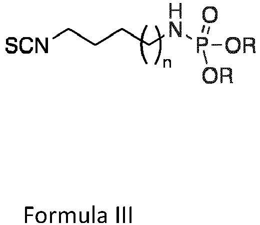 wherein R is an ethyl group and n is any integer selected from the list consisting of 1, 3 and 5;
or any pharmaceutically acceptable salt thereof.

7. The compound according to claim 5, wherein the compound is of formula II and R is an ethyl, or isopropyl group; or any pharmaceutically acceptable salt thereof.

8. The compound according to claim 1, wherein the compound is selected from any of the list consisting of
∘ **SFN-4** (Diethyl (11-isothiocyanato-3,6,9-trioxaundecan-1-yl)phosphoramidate),
∘ **SFN-5** (Diethyl (8-isothiocyanatooctyl)phosphoramidate),
∘ **SFN-6** (Diethyl (6-isothiocyanatohexyl)phosphoramidate),
∘ **SFN-7** (Diethyl (4-isothiocyanatobutyl)phosphoramidate),
∘ **SFN-10** (Diethyl (3-isothiocyanatopropyl) phosphate),
∘ **SFN-14** (Diethyl (4-isothiocyanatobutyl)phosphonate),
∘ **SFN-15** (Diisopropyl (3-isothiocyanatopropyl) phosphate);
or any pharmaceutically acceptable salt thereof.

9. An inclusion α-cyclodextrin complex comprising an encapsulated sulforaphane compound.

10. The inclusion α-cyclodextrin complex comprising an encapsulated sulforaphane compound according to claim 9, wherein the inclusion α-cyclodextrin complex is of formula IV:
(RO)₂-PO-X-(CH₂)ₙ(CH₂OCH₂)ₘCH₂NCS/CD **Formula IV**
and wherein
- CD is α-cyclodextrin;
- R is a hydrogen atom, a substituted or unsubstituted C₁ to C₄ alkyl, a substituted or unsubstituted phenyl
- X is a CH₂, NR₁, OorS;
- R₁ is a hydrogen atom, a substituted or unsubstituted C₁ to C₄ alkyl
- n is any integer between 1 and 10; and
- m is any integer between 0 and 4;
or any pharmaceutical acceptable salt thereof.

11. The inclusion α-cyclodextrin complex according to claim 10, wherein X is a NH or O and m is 0.

12. The inclusion α-cyclodextrin complex according to claim 11, wherein X is O and R is selected from an ethyl, isopropyl or phenyl group.

13. An inclusion complex of a sulforaphane compound analogue, or a pharmaceutically acceptable salt thereof, and a cyclodextrin **characterized in that** it has a molar ratio of the sulforaphane compound analogue, or a pharmaceutically acceptable salt thereof, to the cyclodextrin of 1:1, and wherein the sulforaphane compound analogue is selected from any of the list consisting of:
∘ **SFN-4** (Diethyl 11-isothiocyanato-3,6,9-trioxaundecan-1-ylphosphoramidate),
∘ **SFN-5** (Diethyl (8-isothiocyanatooctyl)phosphoramidate),
∘ **SFN-6** (Diethyl (6-isothiocyanatohexyl)phosphoramidate),
∘ **SFN-7** (Diethyl (4-isothiocyanatobutyl)phosphoramidate),
∘ **SFN-10** (Diethyl (3-isothiocyanatopropyl) phosphate),
∘ **SFN-14** (Diethyl (4-isothiocyanatobutyl)phosphonate),
∘ **SFN-15** (Diisopropyl (3-isothiocyanatopropyl) phosphate);
or any pharmaceutically acceptable salt thereof.

14. A pharmaceutical composition comprising a compound as defined in any of claims 1 to 13.

15. The compound of any of claims 1 to 13 or the pharmaceutical composition according to claim 14, for use in a method of treatment by therapy.

16. The compound of any of claims 1 to 13 or the pharmaceutical composition according to claim 14, for use in a method of treatment of cancer.

17. The compound or composition for use according to claim 16, wherein the cancer is a solid tumour or a haematological cancer.

18. The compound or composition for use according to claim 16, wherein the cancer is a solid tumour selected from the list consisting of lung cancer, in particular lung adenocarcinoma, melanoma, or bladder cancer.

19. The compound or composition for use according to claim 16, wherein the cancer is a haematological cancer selected from the list consisting of acute myeloid leukaemia, multiple myeloma and acute lymphoblastic leukaemia
